# EUROPEAN PATENT APPLICATION

(11) **EP 4 102 870 A1**
(43) Date of publication of application: **14.12.2022**
(21) Application number: 20917765.8
(22) Date of filing: 07.02.2020
(51) Int. Cl.: H04W 8/22, H04W 24/10

(54) **TERMINAL AND COMMUNICATION METHOD**

(71) Applicant: NTT DOCOMO, INC., Chiyoda-Ku Tokyo 100-6150 (JP)
(72) Inventor: TAKAHASHI, Hideaki, Tokyo 100-6150 (JP); MATSUMURA, Yuki, Tokyo 100-6150 (JP)
(74) Representative: Hoffmann Eitle
(86) International application number: PCT/JP2020/004991
(87) International publication number: WO 2021/157090

(57) **Abstract**

A terminal includes a receiving unit configured to receive, from a base station, a message for requesting a report of a terminal capability, a control unit configured to include, into a message for reporting the terminal capability, a terminal capability related to measurement using a reference signal for obtaining information about a channel state, for each band or for each band combination, based on the message for requesting the report of the terminal capability, and a transmitting unit configured to transmit the message for reporting the terminal capability to the base station, wherein a range of a target time domain is specified in the terminal capability related to the measurement.

## Description

### Technical Field

The present invention relates to a terminal and a communication method in a wireless communication system.

### Background Art

In NR (New Radio) (also referred to as "5G"), which is the successor system of LTE (Long Term Evolution), techniques for satisfying, as required conditions, large capacity system, high data transmission speed, low delay, and simultaneous connection of many terminals, low cost, power saving, and the like are being studied. (for example, Non-Patent Document 1).

In an LTE system or NR system, a network inquires of UE (User Equipment) to obtain information of radio access capability of the UE (for example, Non-Patent Document 2). The radio access capabilities of the UE include, for example, the maximum supported date rate, layer 2 total buffer size, a supported band combination, a parameter of a PDCP (Packet Data Convergence Protocol) layer, a parameter of a RLC (Radio Link Control) layer, a parameter of a MAC (Medium Access Control) layer, a parameter of a physical layer, or the like (for example, Non-Patent Document 3).

In a conventional NR system, CodebookParameters for reporting MIMO capabilities supported by the terminal to the network are specified (for example, Non-Patent Document 2). In the CodebookParameters, capabilities of four types of codebooks, i.e., type I single panel, type I multi-panel, type II, and type II port selection are specified. For each of the four types of codebooks, a corresponding CSI-RS resource is reported from the terminal. The corresponding CSI-RS resource includes three capability values, i.e., a maximum number of base station transmission ports per CSI-RS resource (maxNumberTxPortsPerResource), a maximum number of CSI-RS resources per frequency band (maxNumberResourcesPerBand), and a total number of base station transmission ports per frequency band (totalNumberTxPortsPerBand). The CodebookParameters can be reported for each frequency supported by the terminal, so that capabilities of different CodebookParameters can be possessed for different frequency bands.

The maximum number of CSI-RS resources per frequency band (maxNumberResourcesPerBand) and the total number of base station transmission ports per frequency band (totalNumberTxPortsPerBand) can be reported for each band combination (Band combination) supported by the UE. maxNumberSimultaneousNZP-CSI-RS-ActBWP-AllCC defines the maximum number of CSI-RS resources in all the component carriers in the band combination, and totalNumberPortsSimultaneousNZP-CSI-RS-ActBWP-AllCC defines the total number of base station transmission ports in all the component carriers in the band combination. These capability values in the band combination level are defined by assuming a case in which CodebookParameters defined for each frequency need not be supported, or may have a limitation, with respect to a certain band combination.

For example, in a case where the terminal supports 8 CSI-RS resources with respect to a frequency band A, and supports 8 CSI-RS resources with respect to a frequency band B, 8+8 CSI-RS resources, i.e., 16 CSI-RS resources, are supposed to be supported with respect to a band combination of the frequency bands A and B. However, due to the limitation of the processing capability of the terminal, in a case where the frequency bands A and B are combined, the capability values of the respective frequency bands are not necessarily supported. For example, in a case where only 8 CSI-RS resources can be supported in total, "8 CSI-RS resources" is reported in maxNumberSimultaneousNZP-CSI-RS-ActBWP-AllCC defined in the band combination level. In this case, within a range not exceeding 8 CSI-RS resources in total, the network configures, for the terminal, the CSI-RS resources to the carriers of the frequency band A and the frequency band B. For example, the CSI-RS resources are configured, such as, e.g., (Band A, Band B)=(8, 0), (7, 1), within a range not exceeding the maximum value for each frequency band, and not exceeding the total value for the band combination.

### Prior Art Document

### Non-Patent Document

Non-Patent Document 1: 3GPP TS 38.300 V15.8.0 (2019-12)
Non-Patent Document 2: 3GPP TS 38.331 V15.8.0 (2019-12)
Non-Patent Document 3: 3GPP TS 38.306 V15.8.0 (2019-12)

### Summary of the Invention

### Problem to be Solved by the Invention

With conventional techniques, when the network obtains information about radio access capabilities of a terminal, the target range of the radio access capability of the terminal that is reported for each band combination may be unclear.

For example, the definition of an active duration of CSI-RSs may be inconsistent with the definition of a duration of the number of supported CSI-RSs indicated by a capability value of the terminal, and this may cause a problem in a capability value report.

The present invention is made in view of the above issues, and an object of the present invention is to clarify the target range of a report of terminal capabilities in a wireless communication system.

### Means for Solving Problem

According to the disclosed technique, provided is a terminal including a receiving unit configured to receive, from a base station, a message for requesting a report of a terminal capability, a control unit configured to include, into a message for reporting the terminal capability, a terminal capability related to measurement using a reference signal for obtaining information about a channel state, for each band or for each band combination, based on the message for requesting the report of the terminal capability, and a transmitting unit configured to transmit the message for reporting the terminal capability to the base station, wherein a range of a target time domain is specified in the terminal capability related to the measurement.

### Effect of the Invention

According to the disclosed technique, the target range of a report of terminal capabilities can be clarified in a wireless communication system.

### Brief Description of Drawings

FIG. 1 is a figure illustrating a configuration example of a network architecture according to the embodiment of the present invention;
FIG. 2 is a drawing illustrating a configuration example of a radio communication system according to the embodiment of the present invention;
FIG. 3 is a sequence diagram for explaining an example of a report of terminal capabilities according to the embodiment of present invention;
FIG. 4 is a flowchart for explaining an example of a report of terminal capabilities according to the embodiment of present invention;
FIG. 5 is a figure illustrating an example (1) of a specification change of a report of terminal capabilities according to the embodiment of present invention;
FIG. 6 is a figure illustrating an example (2) of a specification change of a report of terminal capabilities according to the embodiment of present invention;
FIG. 7 is a figure illustrating an example (3) of a specification change of a report of terminal capabilities according to the embodiment of present invention;
FIG. 8 is a figure for explaining an example (1) of a way of counting a reference signal according to the embodiment of present invention;
FIG. 9 is a figure for explaining an example (2) of a way of counting a reference signal according to the embodiment of present invention;
FIG. 10 is a figure for explaining an example (3) of a way of counting a reference signal according to the embodiment of present invention;
FIG. 11 is a figure for explaining an example (4) of a way of counting a reference signal according to the embodiment of present invention;
FIG. 12 is a figure for explaining an example (1) of a valid duration of a reference signal according to the embodiment of present invention;
FIG. 13 is a figure for explaining an example (2) of a valid duration of a reference signal according to the embodiment of present invention;
FIG. 14 is a figure for explaining an example (3) of a valid duration of a reference signal according to the embodiment of present invention;
FIG. 15 is a figure for explaining an example (1) of a specification change of a way of counting a reference signal according to the embodiment of present invention;
FIG. 16 is a figure for explaining an example (2) of a specification change of a way of counting a reference signal according to the embodiment of present invention;
FIG. 17 is a figure for explaining an example (3) of a specification change of a way of counting a reference signal according to the embodiment of present invention;
FIG. 18 is a figure for explaining an example (1) of a structure of a report of terminal capabilities according to the embodiment of present invention;
FIG. 19 is a figure for explaining an example (4) of a specification change of a report of terminal capabilities according to the embodiment of present invention;
FIG. 20 is a figure for explaining an example (5) of a specification change of a report of terminal capabilities according to the embodiment of present invention;
FIG. 21 is a figure for explaining an example (2) of a structure of a report of terminal capabilities according to the embodiment of present invention;
FIG. 22 is a figure for explaining an example (6) of a specification change of a report of terminal capabilities according to the embodiment of present invention;
FIG. 23 is a figure for explaining an example (7) of a specification change of a report of terminal capabilities according to the embodiment of present invention;
FIG. 24 is a figure for explaining an example (8) of a specification change of a report of terminal capabilities according to the embodiment of present invention;
FIG. 25 is a figure illustrating an example of a functional configuration of a base station 10 according to the embodiment of the present invention;
FIG. 26 is a figure illustrating an example of a functional configuration of a terminal 20 according to the embodiment of the present invention; and
FIG. 27 is a figure illustrating an example of a hardware configuration of the base station 10 or the terminal 20 according to the embodiment of the present invention.

### Mode for Carrying Out the Invention

An embodiment of the present invention will be hereinafter described with reference to drawings. The embodiment described below is an example, and the embodiment to which the present invention is applied is not limited to the following embodiment.

In operation of a wireless communication system according to embodiments of the present invention, existing techniques are used as appropriate. However, an example of existing technique includes an existing LTE, but is not limited to the existing LTE. In addition, the term "LTE" used in this specification has a broad meaning including LTE-Advanced and specifications newer than LTE-Advanced (e.g., NR) unless otherwise specified.

In the embodiments of the present invention described below, terms such as SS (Synchronization signal), PSS (Primary SS), SSS (Secondary SS), PBCH (Physical broadcast channel), PRACH (Physical random access channel), PDCCH(Physical Downlink Control Channel), PDSCH(Physical Downlink Shared Channel), PUCCH(Physical Uplink Control Channel), PUSCH(Physical Uplink Shared Channel)and the like used in the existing LTE are used. This is for convenience of description, and signals, functions, and the like may be referred to as other names. In NR, the above terms correspond to NR-SS, NR-PSS, NR-SSS, NR-PBCH, NR-PRACH" NR-PDCCH, NR-PDSCH, NR-PUCCH, NR-PUSCH, and the like. However, even when signals are used for NR, "NR-" is not necesarily attached thereto.

In the embodiments of the present invention, the duplexing method may be a TDD (Time Division Duplexing) system, an FDD (Frequency Division Duplexing) system, or others (for example, Flexible Duplexing and the like).

Further, in the embodiment of the present invention, "to configure" a radio parameter or the like may be that a predetermined value is configured in advance (Preconfigure), or that a radio parameter notified from a base station 10 or a terminal 20 is configured.

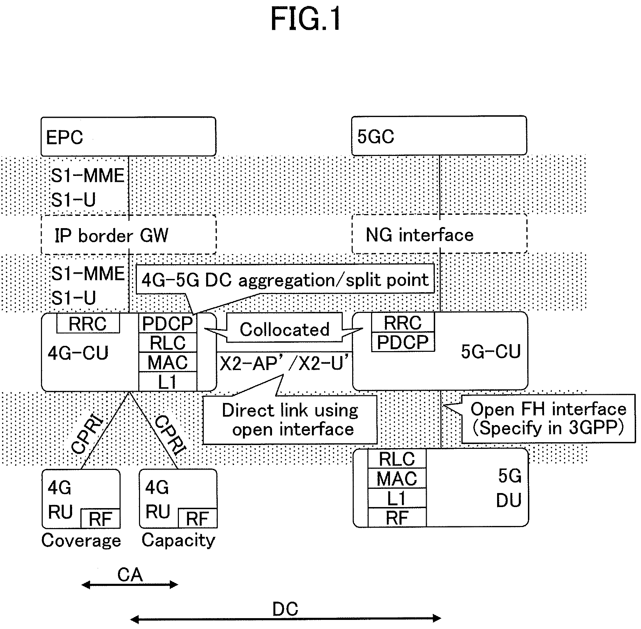

FIG. 1 is a figure illustrating a configuration example of a network architecture according to the embodiment of the present invention. As illustrated in FIG. 1, a radio network architecture according to the embodiment of the present invention includes a 4G-CU, a 4G-RU (Remote Unit, remote radio station), an EPC (Evolved Packet Core), and the like at the LTE-Advanced side. The radio network architecture according to the embodiment of the present invention includes a 5G-CU, a 5G-DU, and the like at the 5G side.

As illustrated in FIG. 1, the 4G-CU includes layers of RRC (Radio Resource Control), PDCP (Packet Data Convergence Protocol), RLC (Radio Link Control), MAC (Medium Access Control), and L1 (layer 1, PHY layer or a physical layer), and is connected to a CPRI (Common Public Radio Interface) to a 4G-RU. A network node including the 4G-CU and the 4G-RU is referred to as an eNB.

At the 5G side, as illustrated in FIG. 1, a 5G-CU includes an RRC layer, and is connected to a 5G-DU via an FH (Flonthaul) interface, and is connected to a 5GC (5G Core Network) via an NG interface (NG interface). Also, the 5G-CU is connected to the 4G-CU via an X2 interface. The PDCP layer of the 4G-CU serves as a joining or separation point in a case of performing 4G-5G DC (Dual Connectivity), i.e., EN-DC (E-UTRA-NR Dual Connectivity). A network node including the 5G-CU and the 5G-DU is referred to as a gNB. The 5G-CU may be referred to as a gNB-CU, and the 5G-DU may be referred to as a gNB-DU.

Also, as illustrated in FIG. 1, CA (Carrier Aggregation) between 4G-RUs is performed, and DC is performed between the 4G-RU and the 5G-DU. Although not illustrated, the UE (User Equipment) is wirelessly connected via the RF of the 4G-RU or the 5G-DU to transmit and receive packets.

It should be noted that FIG. 1 illustrates a radio network architecture during the DC of the LTE-NR, i.e., the EN-DC (E-UTRA-NR Dual Connectivity). However, in a case where the 4G-CU is separated to CU-DU, or NR standalone operation is performed, a similar radio network architecture may also be used. In the case where the 4G-CU is separated to CU-DU, the functions related to the RRC layer and the PDCP layer may be moved to the 4G-CU, and the RLC layer and lower layers may be included in the 4G-DU. It should be noted that, by separating the CU and the DU, the date rate of the CPRI may be reduced.

It should be noted that multiple 5G-DUs may be connected to the 5G-CU. When the UE connects to multiple 5G-CUs, a NR-DC (NR-NR Dual Connectivity) may be performed, and when the UE connects to multiple 5G-DUs and a single 5G-CU, the NR-DC may be performed. Note that the 5G-CU may be directly connected to an EPC without going through the 4G-CU, and 4G-CU may be directly connected to a 5GC without going through the 5G-CU.

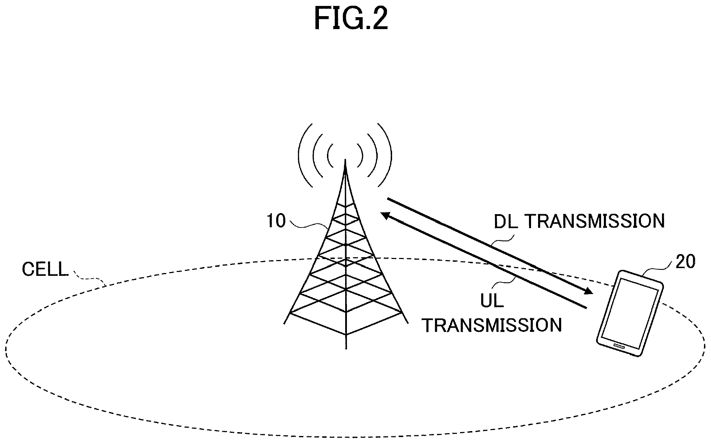

FIG. 2 is a drawing for explaining a radio communication system according to the embodiment of the present invention. As illustrated in FIG. 2, the radio communication system according to the embodiment of the present invention includes a base station 10 and a terminal 20. In FIG. 2, one base station 10 and one terminal 20 are illustrated, but this is only an example. Alternatively, a plurality of base stations 10 and terminals 20 may be provided.

The base station 10 provides one or more cells, and is a communication apparatus wirelessly communicating with the terminal 20. The physical resource of a radio signal is defined in the time domain and the frequency domain. The time domain may be defined by OFDM (Orthogonal Frequency Division Multiplexing) symbol number. The frequency domain may be defined by the number of subcarriers or the number of resource blocks. The base station 10 transmits a synchronization signal and system information to the terminal 20. The synchronization signal is, for example, NR-PSS and NR-SSS. The system information is transmitted in, for example, NR-PBCH, and is also referred to as broadcast information. As illustrated in FIG. 2, the base station 10 transmits a control signal or data to the terminal 20 through DL (Downlink), and receives a control signal or data from the terminal 20 through UL (Uplink). Both the base station 10 and the terminal 20 can transmit and receive signals by performing beamforming. Both of the base station 10 and the terminal 20 can apply communication based on MIMO (Multiple Input Multiple Output) to DL or UL. Also, both of the base station 10 and the terminal 20 may perform communication via a secondary cell (SCell) and a primary cell (PCell) according to CA (Carrier Aggregation).

The terminal 20 is a communication apparatus equipped with a wireless communication function such as a smartphone, a mobile phone, a tablet, a wearable terminal, and a communication module for M2M (Machineto-Machine). As illustrated in FIG. 2, the terminal 20 receives control signals or data from the base station 10 in DL, and transmits control signals or data to the base station 10 in UL, thereby using various communication services provided by the wireless communication system.

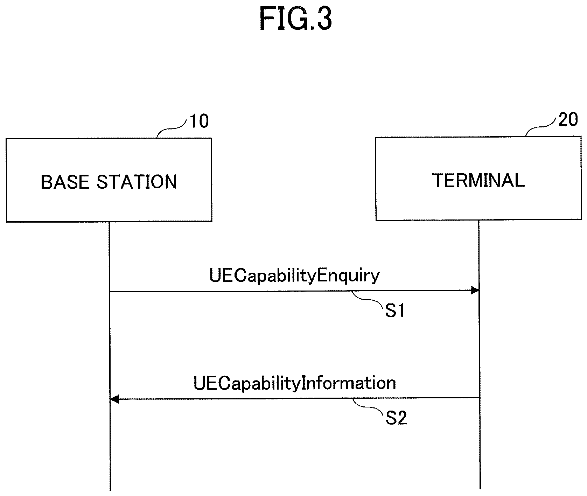

FIG. 3 is a sequence diagram for explaining an example of a report of user equipment capability according to the embodiment of the present invention. In step S1 illustrated in FIG. 3, the base station 10 transmits an "UECapabilityEnquiry", i.e., an inquiry of UE capability to the terminal 20. The "UECapabilityEnquiry" may be an RRC message. In step S2 subsequent thereto, the terminal 20 transmits, with regard to the UE capability specified by the received "UECapabilityEnquiry", "UECapabilityInformation", i.e., a report of UE capability to the base station 10. The "UECapabilityInformation" may be an RRC message including the UE capability supported by the terminal 20. The base station 10 identifies the supported UE capability on the basis of the received "UECapabilityInformation", and applies the identified UE capability to wireless communication with the terminal 20.

For example, the "UECapabilityEnquiry" may inquire about a band combination, a feature set combination, and feature sets, supported by the terminal 20. The band combination indicates a combination of bands. The feature set is a pool for providing multiple sets of parameters of DL and UL. The feature set combination corresponds to one element of two-dimensional matrix of entries of feature sets supported by the terminal 20.

In this case, the "UECapabilityEnquiry" may include capability filters that are applied to the UE capability that is to be inquired about. Specifically, the UE capability specified by the capability filter included in the "UECapabilityEnquiry" may be reported in the "UECapabilityInformation". For example, that capability filter may be specified by an information element "UE-CapabilityRequestFilterCommon".

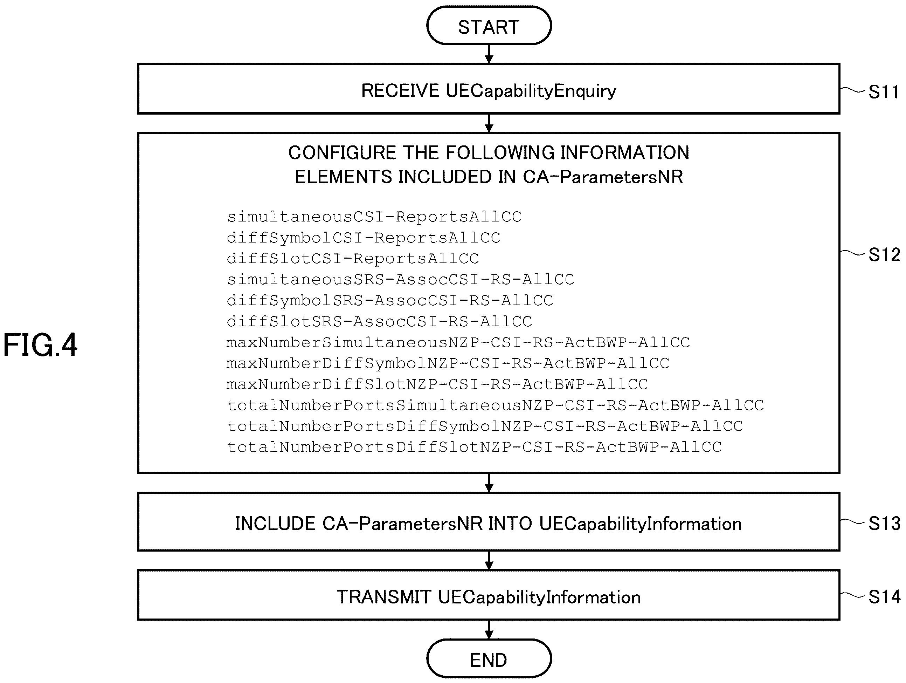

FIG. 4 is a flowchart for explaining an example of a report of terminal capabilities according to the embodiment of present invention. An operation of the terminal 20 in step S1 and step S2 of FIG. 3 is explained with reference to FIG. 4.

In step S11, the terminal 20 receives a "UECapabilityEnquiry" from the base station 10. For example, the "UECapabilityEnquiry" may include information for specifying multiple bands that are to be the subject of a UE capability report.

In step S12, the terminal 20 configures information elements of the following 1)-12) included in "CA-ParametersNR" for each band combination that is the subject of the capability report, on the basis of the "UECapabilityEnquiry" (S12). For example, the band combination to be reported may be two bands selected from multiple bands that are the subject of the capability report, included in the "UECapabilityEnquiry".
1) simultaneousCSI-ReportsAllCC
2) diffSymbolCSI-ReportsAllCC
3) diffSlotCSI-ReportsAllCC
4) simultaneousSRS-AssocCSI-RS-AllCC
5) diffSymbolSRS-AssocCSI-RS-AllCC
6) diffSlotSRS-AssocCSI-RS-AllCC
7) maxNumberSimultaneousNZP-CSI-RS-ActBWP-AllCC
8) maxNumberDiffSymbolNZP-CSI-RS-ActBWP-AllCC
9) maxNumberDiffSlotNZP-CSI-RS-ActBWP-AllCC
10) totalNumberPortsSimultaneousNZP-CSI-RS-ActBWP-AllCC
11) totalNumberPortsDiffSymbolNZP-CSI-RS-ActBWP-AllCC
12) totalNumberPortsDiffSlotNZP-CSI-RS-ActBWP-AllCC

In the conventional art, the information elements 1), 2), and 3) are defined as the same information element, and the time domain, which is the subject of the UE capability, is unclear. Therefore, as illustrated in Table 1, each of the information elements 1), 2), and 3) may be defined as the UE capability.

**[Table 1]**

| **Definitions for parameters** | **Per** | **M** | **FDD - TDD DIFF** | **FR1-FR2 DIFF** |
|---|---|---|---|---|
| ***diffSlotCSI-ReportsAIICC*** | BC | Yes | No | No |
| Indicates whether the UE supports CSI report framework and the number of CSI report(s) which the UE can simultaneously process in the same or different symbols in different slots across all CCs, and across MCG and SCG in case of NR-DC. The CSI report comprises periodic, semi-persistent and aperiodic CSI and any latency classes and codebook types. The CSI report in *diffSlotCSI-ReportsAllCC* includes the beam report and CSI report. This parameter may further limit *simultaneousCSI-ReportsPerCC* in *MIMO-ParametersPerBand* and *Phy-ParametersFRX-Diff* for each band in a given band combination. | | | | |
| ***diffSymbolCSI-ReportsAIICC*** | BC | Yes | No | No |
| Indicates whether the UE supports CSI report framework and the number of CSI report(s) which the UE can simultaneously process in the same or different symbols in the same slot across all CCs, and across MCG and SCG in case of NR-DC. The CSI report comprises periodic, semi-persistent and aperiodic CSI and any latency classes and codebook types. The CSI report in *diffSymbolCSI-ReportsAIICC* includes the beam report and CSI report. This parameter may further limit *simultaneousCSI-ReportsPerCC* in *MIMO-ParametersPerBand* and *Phy-ParametersFRX-Diff for* each band in a given band combination. | | | | |
| ***simultaneousCSI-ReportsAIICC*** | BC | Yes | No | No |
| Indicates whether the UE supports CSI report framework and the number of CSI report(s) which the UE can simultaneously process within the same symbol in the same slot across all CCs, and across MCG and SCG in case of NR-DC. The CSI report comprises periodic, semi-persistent and aperiodic CSI and any latency classes and codebook types. The CSI report in *simultaneousCSI-ReportsAIICC* includes the beam report and CSI report. This parameter may further limit *simulfaneousCSI-ReportsPerCC* in *MIMO-ParametersPerBand* and *Phy-ParametersFRX-Diff* for each band in a given band combination. | | | | |

As shown in Table 1, the "stimultaneousCSI-ReportsAllCC" may be defined to indicate: whether a CSI (Channel state information) framework report is supported; and the number of CSI reports which can be processed simultaneously within the same symbol in the same slot across all CCs in a given band combination. In the case of NR-DC, all the CCs are all the CCs in the MCG and the SCG. The above same symbol includes one or multiple symbols, and corresponds to symbols of which the positions in the time domain of the target symbols in a given slot match across the bands. In a case where the same symbol includes multiple symbols, the symbols may be contiguous in the time domain or may be non-contiguous in the time domain.

The CSI report may include periodic CSI, semi-persistent CSI, and aperiodic CSI, and a latency class and a codebook type. The CSI report, which is the subject of the "simultaneousCSI-ReportsAllCC", may include the beam report and CSI report. The "simultaneousCSI-ReportsAllCC" may further limit the limitations imposed by information elements "simultaneousCSI-ReportsPerCC" and "Phy-ParametersFRX-Diff" for limiting the parameters related to the UE capability in each band of the band combination.

The CSI report framework is capability related to CSI supported by the terminal 20 in each carrier in a given band, and may be defined by the information element "CSI-ReportFramework". The "simultaneousCSI-ReportsPerCC" is an information element included in the "MIMO-ParametersPerBand".

As shown in Table 1, the "diffSymbolCSI-ReportsAllCC" may be defined to indicate: whether a CSI report framework is supported; and the number of CSI reports which can be processed simultaneously within the same symbol or different symbol in the same slot across all CCs in a given band combination. In the case of NR-DC, all the CCs are all the CCs in the MCG and the SCG. The above same symbol includes one or multiple symbols, and corresponds to symbols of which the positions in the time domain of the target symbols in a given slot match across the bands. The above different symbols include one or multiple symbols, and correspond to symbols of which the positions in the time domain of the target symbols in a given slot are different across the bands. In a case where the same symbol or the different symbols include multiple symbols, the symbols may be contiguous in the time domain or may be non-contiguous in the time domain.

The CSI report may include periodic CSI, semi-persistent CSI, and aperiodic CSI, and a latency class and a codebook type. The CSI report, which is the subject of the "diffSymbolCSI-ReportsAllCC", may include the beam report and CSI report. The "diffSymbolCSI-ReportsAllCC" may further limit the limitations imposed by information elements "simultaneousCSI-ReportsPerCC" and "Phy-ParametersFRX-Diff" for limiting the parameters related to the UE capability in each band of the band combination.

As shown in Table 1, the "diffSlotCSI-ReportsAllCC" may be defined to indicate: whether a CSI report framework is supported; and the number of CSI reports which can be processed simultaneously within the same symbol or different symbol in different slots across all CCs in a given band combination. In the case of NR-DC, all the CCs are all the CCs in the MCG and the SCG. The above same symbol includes one or multiple symbols, and corresponds to symbols of which the positions in the time domain of the target symbols in a given slot match across the bands. The above different symbols include one or multiple symbols, and correspond to symbols of which the positions in the time domain of the target symbols in a given slot are different across the bands. In a case where the same symbol or the different symbols include multiple symbols, the symbols may be contiguous in the time domain or may be non-contiguous in the time domain.

The CSI report may include periodic CSI, semi-persistent CSI, and aperiodic CSI, and a latency class and a codebook type. The CSI report, which is the subject of the "diffSlotCSI-ReportsAllCC", may include the beam report and CSI report. The "diffSlotCSI-ReportsAllCC" may further limit the limitations imposed by information elements "simultaneousCSI-ReportsPerCC" and "Phy-ParametersFRX-Diff" for limiting the parameters related to the UE capability in each band of the band combination.

In the conventional art, the information elements 4), 5), and 6) are defined as the same information element, and the time domain, which is the subject of the UE capability, is unclear. Therefore, as illustrated in Table 2, each of the information elements 4), 5), and 6) may be defined as the UE capability.

**[Table 2]**

| **Definitions for parameters** | **Per** | **M** | **FDD - TDD DIFF** | **FR1FR2 DIFF** |
|---|---|---|---|---|
| ***diffSlotSRS-AssocCSI-RS-AllCC*** | BC | No | No | No |
| Indicates support of CSI-RS processing framework for SRS and the number of SRS resources that the UE can process simultaneously in the same or different symbols in different slots across all CCs, and across MCG and SCG in case of NR-DC, including periodic, aperiodic and semi-persistent SRS. This parameter may further limit *simultaneousSRS-AssocCSI-RS-PerCC* in *MIMO-ParametersPerBand* and *Phy-ParametersFRX-Diff* for each band in a given band combination. | | | | |
| ***diffSymbolSRS-AsSocCSI-RS-AllCC*** | BC | No | No | No |
| Indicates support of CSI-RS processing framework for SRS and the number of SRS resources that the UE can process simultaneously in the same or different symbols in the same slot across all CCs, and across MCG and SCG in case of NR-DC, including periodic, aperiodic and semi-persistent SRS. This parameter may further limit *simultaneousSRS-AssocCSI-RS-PerCC* in *MIMO-ParametersPerBand* and *Phy-ParametersFRX-Diff* for each band in a given band combination. | | | | |
| ***simultaneousSRS-AssocCSI-RS-AllCC*** | BC | No | No | No |
| Indicates support of CSI-RS processing framework for SRS and the number of SRS resources that the UE can process simultaneously within the same symbol in the same slot across all CCs, and across MCG and SCG in case of NR-DC, including periodic, aperiodic and semi-persistent SRS. This parameter may further limit *simuitaneousSRS-AssocCSI-RS-PerCC* in *MIMO-ParametersPerBand* and *Phy-ParametersFRX-Diff* for each band in a given band combination. | | | | |

As shown in Table 2, the "simultaneousSRS-AssocCSI-RS-AllCC" may be defined to indicate: whether a CSI-RS processing framework for SRS (Sounding Reference Signal) is supported; and the number of SRS resources which can be processed simultaneously within the same symbol in the same slot across all CCs in a given band combination. In the case of NR-DC, all the CCs are all the CCs in the MCG and the SCG.

The SRS may include periodic SRS, aperiodic SRS, and semi-persistent SRS. The "simultaneousSRS-AssocCSI-RS-AllCC" may further limit the limitations imposed by information elements "simultaneousSRS-AssocCSI-RS-PerCC" and "Phy-ParametersFRX-Diff" for limiting the parameters related to the UE capability in each band of the band combination.

The CSI-RS processing framework for the SRS is capability related to the CSI-RS and SRS supported by the terminal 20 in each carrier in a given band, and may be defined by an information element "CSI-RS-ProcFrameworkForSRS". The "simultaneousSRS-AssocCSI-RS-PerCC" is an information element included in the "MIMO-ParametersPerBand".

As shown in Table 2, the "diffSymbolSRS-AssocCSI-RS-AllCC" may be defined to indicate: whether a CSI-RS processing framework for SRS (Sounding Reference Signal) is supported; and the number of SRS resources that can be processed simultaneously within the same symbol or different symbols in the same slot across all CCs in a given band combination. In the case of NR-DC, all the CCs are all the CCs in the MCG and the SCG.

The SRS may include periodic SRS, aperiodic SRS, and semi-persistent SRS. The "diffSymbolSRS-AssocCSI-RS-AllCC" may further limit the limitations imposed by information elements "simultaneousSRS-AssocCSI-RS-PerCC" and "Phy-ParametersFRX-Diff" for limiting the parameters related to the UE capability in each band of the band combination.

As shown in Table 2, the "diffSlotSRS-AssocCSI-RS-AllCC" may be defined to indicate: whether a CSI-RS processing framework for SRS (Sounding Reference Signal) is supported; and the number of SRS resources that can be processed simultaneously within the same symbol or different symbols in different slots across all CCs in a given band combination. In the case of NR-DC, all the CCs are all the CCs in the MCG and the SCG.

The SRS may include periodic SRS, aperiodic SRS, and semi-persistent SRS. The "diffSlotSRS-AssocCSI-RS-AllCC" may further limit the limitations imposed by information elements "simultaneousSRS-AssocCSI-RS-PerCC" and "Phy-ParametersFRX-Diff" for limiting the parameters related to the UE capability in each band of the band combination.

In the conventional art, the information elements 7), 8), and 9) are defined as the same information element, and the time domain, which is the subject of the UE capability, is unclear. Therefore, as illustrated in Table 3, each of the information elements 7), 8), and 9) may be defined as the UE capability.

**[Table 3]**

| **Definitions for parameters** | | **Per** | **M** | **FDD TDD DIFF** | **FR1-FR2 DIFF** |
|---|---|---|---|---|---|
| ***csi-RS-IM-ReceptionForFeedbackPerBandComb, csi-RS-IM-ReceptionForFeedbackPerBandComb-v15xy*** | | BC | Yes | No | No |
| Indicates support of CSI-RS and CSI-IM reception for CSI feedback. This capability signalling comprises the following parameters: | | | | | |
| | - *maxNumberSimultaneousNZP-CSI-RS-ActBWP-AllCC* indicates the maximum number of simultaneous CSI-RS resources in active BWPs within the same symbol in the same slot across all CCs, and across MCG and SCG in case of NR-DC. This parameter limits the total number of NZP-CSI-RS resources that the NW may configure across all CCs, and across MCG and SCG in case of NR-DC (irrespective of the associated codebook type). The network applies this limit in addition to the limits signalled in *MIMO-ParametersPerBand-> maxNumberSimultaneousNZP-CSI-RS-PerCC* and in *Phy-ParametersFRX-Diff-> maxNumberSimultaneousNZP-CSI-RS-PerCC;* | | | | |
| | - *maxNumberDiffSlotNZP-CSI-RS-ActBWP-AllCC* indicates the maximum number of simultaneous CSI-RS resources in active BWPs in the same or different symbols in different slots across all CCs, and across MCG and SCG in case of NR-DC. This parameter limits the total number of NZP-CSI-RS resources that the NW may configure across all CCs, and across MCG and SCG in case of NR-DC (irrespective of the associated codebook type). The network applies this limit in addition to the limits signalled in *MMO-ParametersPerBand-> maxNumberSimultaneousNZP-CSI-RS-PerCC* and in *Phy-ParametersFRX-Diff-> maxNumberSimultaneousNZP-CSI-RS-PerCC;* | | | | |
| | - *maxNumberDiffSymbolNZP-CSI-RS-ActBWP-AllCC* indicates the maximum number of simultaneous CSI-RS resources in active BWPs in the same or different symbols in the same slot across all CCs, and across MCG and SCG in case of NR-DC. This parameter limits the total number of NZP-CSI-RS resources that the NW may configure across all CCs, and across MCG and SCG in case of NR-DC (irrespective of the associated codebook type). The network applies this limit in addition to the limits signalled in *MIMO-ParametersPerBand-> maxNumberSimultaneousNZP-CSI-RS-PerCC* and in *Phy-ParametersFRX-Diff-> maxNumberSimultaneousNZP-CSI-RS-PerCC;* | | | | |

As shown in Table 3, the "maxNumberSimultaneousNZP-CSI-RS-ActBWP-AllCC" may be defined as the maximum number of simultaneous CSI-RS resources in active BWPs (Bandwidth part) within the same symbol in the same slot across all CCs in a given band combination. In the case of NR-DC, all the CCs are all the CCs in the MCG and the SCG.

The "maxNumberSimultaneousNZP-CSI-RS-ActBWP-AllCC" limits the total number of NZP-CSI-RS resources configured by the network. The limitations imposed by the information element "maxNumberSimultaneousNZP-CSI-RS-PerCC" for limiting the parameters related to the UE capability in each band of the band combination may be further limited. The "maxNumberSimultaneousNZP-CSI-RS-PerCC" is an information element included in the "MIMO-ParametersPerBand" and the "Phy-ParametersFRX-Diff".

As shown in Table 3, the "maxNumberDiffSymbolNZP-CSI-RS-ActBWP-AllCC" may be defined to indicate the maximum number of simultaneous CSI-RS resources in active BWPs (Bandwidth part) within the same symbol or different symbols in the same slot across all CCs in a given band combination. In the case of NR-DC, all the CCs are all the CCs in the MCG and the SCG.

The "maxNumberDiffSymbolNZP-CSI-RS-ActBWP-AllCC" limits the total number of NZP-CSI-RS resources configured by the network. The limitations imposed by the information element "maxNumberSimultaneousNZP-CSI-RS-PerCC" for limiting the parameters related to the UE capability in each band of the band combination may be further limited. The "maxNumberSimultaneousNZP-CSI-RS-PerCC" is an information element included in the "MIMO-ParametersPerBand" and the "Phy-ParametersFRX-Diff".

As shown in Table 3, the "maxNumberDiffSlotNZP-CSI-RS-ActBWP-AllCC" may be defined to indicate the maximum number of simultaneous CSI-RS resources in active BWPs (Bandwidth part) within the same symbol or different symbols in different slots across all CCs in a given band combination. In the case of NR-DC, all the CCs are all the CCs in the MCG and the SCG.

The "maxNumberDiffSlotNZP-CSI-RS-ActBWP-AllCC" limits the total number of NZP-CSI-RS resources configured by the network. The limitations imposed by the information element "maxNumberSimultaneousNZP-CSI-RS-PerCC" for limiting the parameters related to the UE capability in each band of the band combination may be further limited. The "maxNumberSimultaneousNZP-CSI-RS-PerCC" is an information element included in the "MIMO-ParametersPerBand" and the "Phy-ParametersFRX-Diff".

In the conventional art, the information elements 10), 11), and 12) are defined as the same information element, and the time domain, which is the subject of the UE capability, is unclear. Therefore, as illustrated in Table 4, each of the information elements 10), 11), and 12) may be defined as the UE capability.

**[Table 4]**

| **Definitions for parameters** | | **Per** | **M** | **FDD TDD DIFF** | **FR1** - **FR2 DIFF** |
|---|---|---|---|---|---|
| ***csi-RS-IM-ReceptionForFeedbackPerBandComb, csi-RS-IM-ReceptionForFeedbackPerBandComb-v15xy*** | | BC | Yes | No | No |
| Indicates support of CSI-RS and CSI-IM reception for CSI feedback. This capability signalling comprises the following parameters: | | | | | |
| | - *totalNumberPortsSimultaneousNZP-CSI-RS-ActBWP-AllCC* indicates the total number of CSI-RS ports in simultaneous CSI-RS resources in active BWPs within the same symbol in the same slot across all CCs, and across MCG and SCG in case of NR-DC. This parameter limits the total number of ports that the NW may configure across all NZP-CSI-RS resources across all CCs, and across MCG and SCG in case of NR-DC (irrespective of the associated codebook type). The network applies this limit in addition to the limits signalled in *MIMO-ParametersPerBand-> totalNumberPortsSimultaneousNZP-CSI-RS-PerCC* and in *Phy-ParametersFRX-Diff-> totalNumberPortsSimuttaneousNZP-CSI-RS-PerCC.* | | | | |
| | | | | | |
| | - *totalNumberPortsDiffSlotNZP-CSI-RS-ActBWP-AHCC* indicates the total number of CSI-RS ports in simultaneous CSI-RS resources in active BWPs in the same or different symbols in different slots across all CCs, and across MCG and SCG in case of NR-DC. This parameter limits the total number of ports that the NW may configure across all NZP-CSI-RS resources across all CCs, and across MCG and SCG in case of NR-DC (irrespective of the associated codebook type). The network applies this limit in addition to the limits signalled in *MIMO-ParametersPerBand-> totalNumberPortsSimultaneousNZP-CSI-RS-PerCC* and in *Phy-ParametersFRX-Diff-> totalNumberPortsSimultaneousNZP-CSI-RS-PerCC.* | | | | |
| | | | | | |
| | - *totalNumberPortsDiffSymbolNZP-CSI-RS-ActBWP-AllCC* indicates the total number of CSI-RS ports in simultaneous CSI-RS resources in active BWPs in the same or different symbols in the same slot across all CCs, and across MCG and SCG in case of NR-DC. This parameter limits the total number of ports that the NW may configure across all NZP-CSI-RS resources across all CCs, and across MCG and SCG in case of NR-DC (irrespective of the associated codebook type). The network applies this limit in addition to the limits signalled in *MIMO-ParametersPerBand-> totalNumberPortsSimultaneousNZP-CSI-RS-PerCC* and in *Phy-ParametersFRX-Diff-> totalNumberPortsSimultaneousNZP-CSI-RS-PerCC.* | | | | |

As shown in Table 4, the "totalNumberPortsSimultaneousNZP-CSI-RS-ActBWP-AllCC" may be defined indicate the total number of ports in simultaneous CSI-RS resources in active BWP within the same symbol in the same slot across all CCs in a given band combination. In the case of NR-DC, all the CCs are all the CCs in the MCG and the SCG.

The "totalNumberPortsSimultaneousNZP-CSI-RS-ActBWP-AllCC" limits the total number of NZP-CSI-RS resources configured by the network. The limitations imposed by the information element "totalNumberPortsSimultaneousNZP-CSI-RS-PerCC" for limiting the parameters related to the UE capability in each band of the band combination may be further limited. The "totalNumberPortsSimultaneousNZP-CSI-RS-PerCC is an information element included in the "MIMO-ParametersPerBand" and the "Phy-ParametersFRX-Diff".

As shown in Table 4, the "totalNumberPortsDiffSymbolNZP-CSI-RS-ActBWP-AllCC" may be defined to indicate the total number of ports in simultaneous CSI-RS resources in active BWPs (Bandwidth part) within the same symbol or different symbols in the same slot across all CCs in a given band combination. In the case of NR-DC, all the CCs are all the CCs in the MCG and the SCG.

The "totalNumberPortsDiffSymbolNZP-CSI-RS-ActBWP-AllCC" limits the total number of NZP-CSI-RS resources configured by the network. The limitations imposed by the information element "totalNumberPortsSimultaneousNZP-CSI-RS-PerCC" for limiting the parameters related to the UE capability in each band of the band combination may be further limited. The "totalNumberPortsSimultaneousNZP-CSI-RS-PerCC is an information element included in the "MIMO-ParametersPerBand" and the "Phy-ParametersFRX-Diff".

As shown in Table 4, the "totalNumberPortsDiffSlotNZP-CSI-RS-ActBWP-AllCC" may be defined to indicate the total number of ports in simultaneous CSI-RS resources in active BWPs (Bandwidth part) within the same symbol or different symbols in different slots across all CCs in a given band combination. In the case of NR-DC, all the CCs are all the CCs in the MCG and the SCG.

The "totalNumberPortsDiffSlotNZP-CSI-RS-ActBWP-AllCC" limits the total number of NZP-CSI-RS resources configured by the network. The limitations imposed by the information element "totalNumberPortsSimultaneousNZP-CSI-RS-PerCC" for limiting the parameters related to the UE capability in each band of the band combination may be further limited. The "totalNumberPortsSimultaneousNZP-CSI-RS-PerCC is an information element included in the "MIMO-ParametersPerBand" and the "Phy-ParametersFRX-Diff".

In step S13, the terminal 20 includes "CA-ParametersNR", in which information elements are configured in step S12, into an RRC message "UECapabilityInformation". For example, "CA-ParametersNR" may be included in the "UECapabilityInformation" according to the following inclusion relationship of the information elements.

CA-ParametersNR>BandCombination > BandCombinationList > RF-Parameters>UE-NR-Capability > UE-CapabilityRAT-Container > UE-CapabilityRAT-ContainerList > UECapabilityInformation-IEs > UECapabilityInformation

In step S14, the terminal 20 transmits, the RRC message "UECapabilityInformation", including the information element "CA-ParametersNR", to the base station 10.

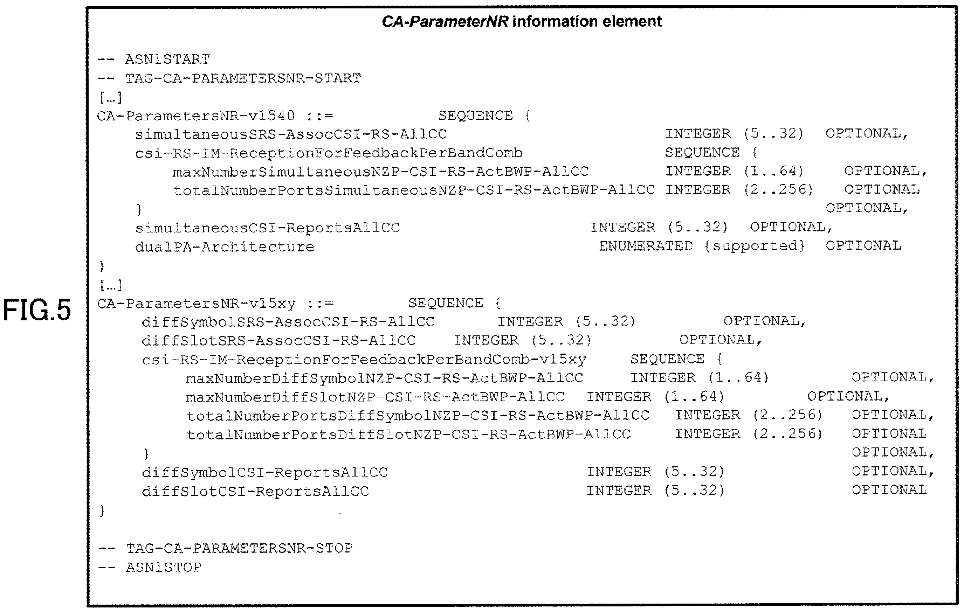

FIG. 5 is a figure illustrating an example (1) of a specification change of a report of terminal capabilities according to the embodiment of present invention. As illustrated in FIG. 5, the "simultaneousSRS-AssocCSI-RS-AllCC" included in a conventionally defined "CA-ParametersNR-v1540" is set to an integer of 5 to 32, the "maxNumberSimultaneousNZP-CSI-RS-ActBWP-AllCC" is set to an integer of 1 to 64, the "totalNumberPortsSimultaneousNZP-CSI-RS-ActBWP-AllCC" is set to an integer of 2 to 256, and the "simultaneousCSI-ReportsAllCC" is set to an integer of 5 to 32. Note that each of the information elements is optional, and may be configured or need not be configured.

Further, the "diffSymbolSRS-AssocCSI-RS-AllCC" included in a newly defined "CA-ParametersNR-v15xy" is set to an integer of 5 to 32, the "diffSlotSRS-AssocCSI-RS-AllCC" is set to an integer of 5 to 32, the "maxNumberDiffSymbolNZP-CSI-RS-ActBWP-AllCC" is set to an integer of 1 to 64, the "maxNumberDiffSlotNZP-CSI-RS-ActBWP-AllCC" is set to an integer of 1 to 64, the "totalNumberPortsDiffSymbolNZP-CSI-RS-ActBWP-AllCC" is set to an integer of 2 to 256, the "totalNumberPortsDiffSlotNZP-CSI-RS-ActBWP-AllCC" is set to an integer of 2 to 256, the "diffSymbolCSI-ReportsAllCC" is set to an integer of 5 to 32, and the "diffSlotCSI-ReportsAllCC" is set to an integer of 5 to 32. Note that each of the information elements is optional, and may be configured or need not be configured.

Table 5 shows the details of the operation defined by a CA-ParametersNR field related to the information elements shown in Table 1.

**[Table 5]**

| ***CA-ParametersNR field description* (1)** |
|---|
| ***diffSlotCSl-ReportsAllCC*** |
| Limits the total number of CSI reports in the same or different symbols in different slots that the NW may configure across all CCs. This parameter may further limit simultaneousCSI-ReportsPerCC in MIMO-ParametersPerBand and Phy-ParametersFRX-Diff for each band in a given band combination. |
| ***diffSymbolCSI-ReportsAllCC*** |
| Limits the total number of CSI reports in the same or different symbols in the same slot that the NW may configure across all CCs. This parameter may further limit simultaneousCSI-ReportsPerCC in MIMO-ParametersPerBand and Phy-ParametersFRX-Diff for each band in a given band combination. |
| ***simuitaneousCSI-ReportsAllCC*** |
| Limits the total number of CSI reports within the same symbol in the same slot that the NW may configure across all CCs. This parameter may further limit simultaneousCSI-ReportsPerCC in MIMO-ParametersPerBand and Phy-ParametersFRX-Diff for each band in a given band combination. |

As shown in Table 5, the "simultaneousCSI-ReportsAllCC" limits the total number of CSI reports within the same symbol in the same slot across all CCs that can be configured in the network in a given band combination. The "simultaneousCSI-ReportsAllCC" may further limit the limitations imposed by information elements "simultaneousCSI-ReportsPerCC" and "Phy-ParametersFRX-Diff" for limiting the parameters related to the UE capability in each band of the band combination.

As shown in Table 5, the "diffSymbolCSI-ReportsAllCC" limits the total number of CSI reports within the same symbol or different symbols in the same slot across all CCs that can be configured in the network in a given band combination. The "diffSymbolCSI-ReportsAllCC" may further limit the limitations imposed by information elements "simultaneousCSI-ReportsPerCC" and "Phy-ParametersFRX-Diff" for limiting the parameters related to the UE capability in each band of the band combination.

As shown in Table 5, the "diffSlotCSI-ReportsAllCC" limits the total number of CSI reports within the same symbol or different symbols in different slots across all CCs that can be configured in the network in a given band combination. The "diffSlotCSI-ReportsAllCC" may further limit the limitations imposed by information elements "simultaneousCSI-ReportsPerCC" and "Phy-ParametersFRX-Diff" for limiting the parameters related to the UE capability in each band of the band combination.

Table 6 shows the details of the operation defined by a CA-ParametersNR field related to the information elements shown in Table 2.

**[Table 6]**

| ***CA-ParametersNR field description (2)*** |
|---|
| ***diffSlotSRS-AssocCSI-RS-AllCC*** |
| Limits the total number of SRS resources associated with CSI-RS resources in the same or different symbols in different slots that the NW may configure across all CCs. This parameter may further limit *simultaneousSRS-AssocCSI-RS-*PerCC in *MIMO-ParametersPerBand* and *Phy-ParametersFRX-Diff* for each band in a given band combination. |
| ***diffSymboiSRS-AssocCSI-RS-AllCC*** |
| Limits the total number of SRS resources associated with CSI-RS resources in the same or different symbols in the same slot that the NW may configure across all CCs. This parameter may further limit *simultaneousSRS-AssocCSI-RS-*PerCC in *MIMO-ParametersPerBand* and *Phy-ParametersFRX-Diff* for each band in a given band combination. |
| ***simultaneousSRS-AssocGSI-RS-AllCC*** |
| Limits the total number of SRS resources associated with CSI-RS resources within the same symbol in the same slot that the NW may configure across all CCs. This parameter may further limit simultaneousSRS-AssocCSI-RS-PerCC in MIMO-ParametersPerBand and Phy-ParametersFRX-Diff for each band in a given band combination. |

As shown in Table 6, the "simultaneousSRS-AssocCSI-RS-AllCC" limits the total number of SRS resources associated with CSI-RS resources within the same symbol in the same slot across all CCS that can be configured in the network in a given band combination. The "simultaneousSRS-AssocCSI-RS-AllCC" may further limit the limitations imposed by information elements "simultaneousSRS-AssocCSI-RS-PerCC" and ParametersFRX-Diff" for limiting the parameters related to the UE capability in each band of the band combination.

As shown in Table 6, the "diffSymbolSRS-AssocCSI-RS-AllCC" limits the total number of SRS resources associated with CSI-RS resources within the same symbol or different symbols in the same slot across all CCS that can be configured in the network in a given band combination. The "diffSymbolSRS-AssocCSI-RS-AllCC" may further limit the limitations imposed by information elements"simultaneousSRS-AssocCSI-RS-PerCC" and ParametersFRX-Diff" for limiting the parameters related to the UE capability in each band of the band combination.

As shown in Table 6, the "diffSlotSRS-AssocCSI-RS-AllCC" limits the total number of SRS resources associated with CSI-RS resources within the same symbol or different symbols in different slots across all CCS that can be configured in the network in a given band combination. The "diffSlotSRS-AssocCSI-RS-AllCC" may further limit the limitations imposed by information elements"simultaneousSRS-AssocCSI-RS-PerCC" and ParametersFRX-Diff" for limiting the parameters related to the UE capability in each band of the band combination.

Table 7 shows the details of the operation defined by a CA-ParametersNR field elated to the information elements shown in Table 3.

**[Table 7]**

| ***CA-ParametersNR field description* (3)** |
|---|
| ***maxNumberDiffSlotNZP-CSI-RS-ActBWP-AllCC*** |
| Limits the total number of NZP-CSI-RS resources in the same or different symbols in different slots that the NW may configure across all CCs (irrespective of the associated codebook type). The network applies this limit in addition to the limits signalled in *MIMO-ParametersPerBand->* maxNumberSimultaneousNZP-CSI-RS-PerCC and in Phy-ParametersFRX-Diff-> maxNumberSimultaneousNZP-CSI-RS-PerCC. |
| ***maxNumberDiffSymbolNZP-CSI-RS-ActBWP-AllCC*** |
| Limits the total number of NZP-CSI-RS resources in the same or different symbols in the same slot that the NW may configure across all CCs (irrespective of the associated codebook type). The network applies this limit in addition to the limits signalled in MIMO-ParametersPerBand-> maxNumberSimultaneousNZP-CSI-RS-PerCC and in Phy-ParametersFRX-Diff-> maxNumberSimultaneousNZP-CSI-RS-PerCC. |
| ***maxNumberSimultaneousNZP-CSI-RS-ActBWP-AllCC*** |
| Limits the total number of NZP-CSI-RS resources within the same symbol in the same slot that the NW may configure across all CCs (irrespective of the associated codebook type). The network applies this limit in addition to the limits signalled in MIMO-ParametersPerBand-> maxNumberSimultaneousNZP-CSI-RS-PerCC and in Phy-ParametersFRX-Diff-> maxNumberSimultaneousNZP-CSI-RS-PerCC. |

As shown in Table 7, the "maxNumberSimultaneousNZP-CSI-RS-ActBWP-AllCC" limits the total number of NZP-CSI-RS resources within the same symbol in the same slot across all CCs that can be configured in the network in a given band combination. The "maxNumberSimultaneousNZP-CSI-RS-ActBWP-AllCC" may further limit the limitations imposed by information elements "maxNumberSimultaneousNZP-CSI-RS-PerCC" and "Phy-ParametersFRX-Diff" for limiting the parameters related to the UE capability in each band of the band combination.

As shown in Table 7, the "maxNumberDiffSymbolNZP-CSI-RS-ActBWP-AllCC" limits the total number of NZP-CSI-RS resources within the same symbol or different symbols in the same slot across all CCs that can be configured in the network in a given band combination. The "maxNumberDiffSymbolNZP-CSI-RS-ActBWP-AllCC" may further limit the limitations imposed by information elements "maxNumberSimultaneousNZP-CSI-RS-PerCC" and "Phy-ParametersFRX-Diff" for limiting the parameters related to the UE capability in each band of the band combination.

As shown in Table 7, the "maxNumberDiffSlotNZP-CSI-RS-ActBWP-AllCC" limits the total number of NZP-CSI-RS resources within the same symbol or different symbols in different slots across all CCs that can be configured in the network in a given band combination. The "maxNumberDiffSlotNZP-CSI-RS-ActBWP-AllCC" may further limit the limitations imposed by information elements "maxNumberSimultaneousNZP-CSI-RS-PerCC" and "Phy-ParametersFRX-Diff" for limiting the parameters related to the UE capability in each band of the band combination.

Table 8 shows the details of the operation defined by a CA-ParametersNR field related to the information elements shown in Table 4.

**[Table 8]**

| ***CA-ParametersNR field description* (4)** |
|---|
| ***totalNumberPortsDiffSlotNZP-CSI-RS-ActBWP-AllCC*** |
| Limits the total number of ports in the same or different symbols in different slots that the NW may configure across all NZP-CSI-RS resources across all CCs (irrespective of the associated codebook type). The network applies this limit in addition to the limits signalled in MIMO-ParametersPerBand-> totalNumberPortsSimultaneousNZP-CSI-RS-PerCC and in Phy-ParametersFRX-Diff-> totalNumberPortsSimultaneousNZP-CSI-RS-PerCC. |

| ***totalNumberPortsDiffSymbolNZP-CSI-RS-ActBWP-AllCC*** |
|---|
| Limits the total number of ports in the same or different symbols in the same slot that the NW may configure across all NZP-CSI-RS resources across all CCs (irrespective of the associated codebook type). The network applies this limit in addition to the limits signalled in MIMO-ParametersPerBand-> totalNumberPortsSimultaneousNZP-CSI-RS-PerCC and in Phy-ParametersFRX-Diff-> totalNumberPortsSimultaneousNZP-CSI-RS-PerCC. |

| ***totalNumberPortsSimultaneousNZP-CSI-RS-ActBWP-AllCC*** |
|---|
| Limits the total number of ports within the same symbol in the same slot that the NW may configure across all NZP-CSI-RS resources across all CCs (irrespective of the associated codebook type). The network applies this limit in addition to the limits signalled in MIMO-ParametersPerBand-> totalNumberPortsSimultaneousNZP-CSI-RS-PerCC and in Phy-ParametersFRX-Diff-> totalNumberPortsSimultaneousNZP-CSI-RS-PerCC. |

As shown in Table 8, the "totalNumberPortsSimultaneousNZP-CSI-RS-ActBWP-AllCC" limits the total number of ports in NZP-CSI-RS resources within the same symbol in the same slot across all CCs that can be configured in the network in a given band combination. The "totalNumberPortsSimultaneousNZP-CSI-RS-ActBWP-AllCC" may further limit the limitations imposed by information elements "totalNumberPortsSimultaneousNZP-CSI-RS-PerCC" and "Phy-ParametersFRX-Diff" for limiting the parameters related to the UE capability in each band of the band combination.

As shown in Table 8, the "totalNumberPortsDiffSymbolNZP-CSI-RS-ActBWP-AllCC" limits the total number of ports in NZP-CSI-RS resources within the same symbol or different symbols in the same slot across all CCs that can be configured in the network in a given band combination. The "totalNumberPortsDiffSymbolNZP-CSI-RS-ActBWP-AllCC" may further limit the limitations imposed by information elements "totalNumberPortsSimultaneousNZP-CSI-RS-PerCC" and "Phy-ParametersFRX-Diff" for limiting the parameters related to the UE capability in each band of the band combination.

As shown in Table 8, the " totalNumberPortsDiffSlotNZP-CSI-RS-ActBWP-AllCC" limits the total number of ports in NZP-CSI-RS resources within the same symbol or different symbols in different slots across all CCs that can be configured in the network in a given band combination. The " totalNumberPortsDiffSlotNZP-CSI-RS-ActBWP-AllCC" may further limit the limitations imposed by information elements "totalNumberPortsSimultaneousNZP-CSI-RS-PerCC" and "Phy-ParametersFRX-Diff" for limiting the parameters related to the UE capability in each band of the band combination.

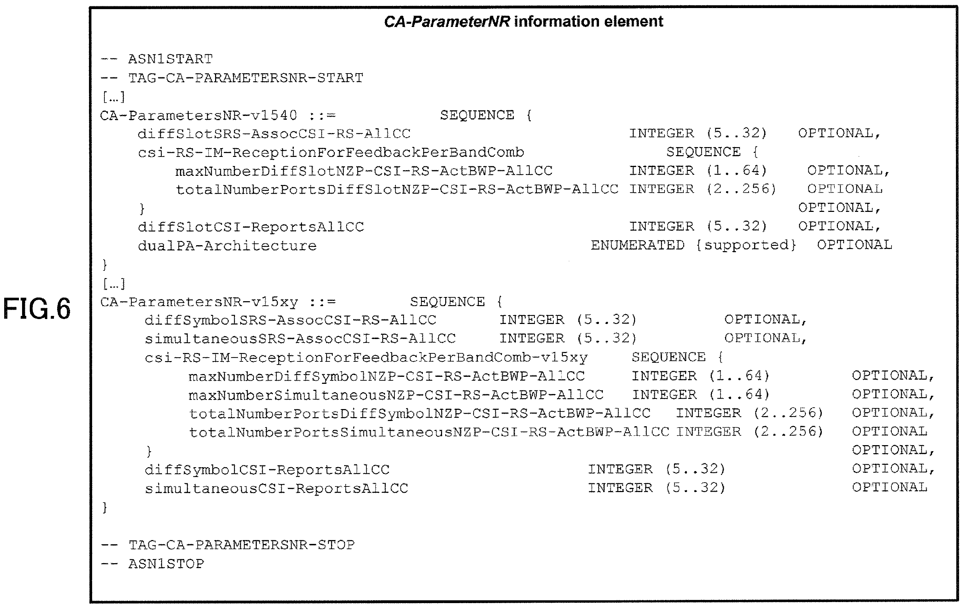

FIG. 6 is a figure illustrating an example (2) of a specification change of a report of terminal capabilities according to the embodiment of present invention. As illustrated in FIG. 6, the "diffSlotSRS-AssocCSI-RS-AllCC" included in a conventionally defined "CA-ParametersNR-v1540" is set to an integer of 5 to 32, the "maxNumberDiffSlotNZP-CSI-RS-ActBWP-AllCC" is set to an integer of 1 to 64, the "totalNumberPortsDiffSlotNZP-CSI-RS-ActBWP-AllCC" is set to an integer of 2 to 256, and the "diffSlotCSI-ReportsAllCC" is set to an integer of 5 to 32. Note that each of the information elements is optional, and may be configured or need not be configured.

Further, the "diffSymbolSRS-AssocCSI-RS-AllCC" included in a newly defined "CA-ParametersNR-v15xy" is set to an integer of 5 to 32, the "simultaneousSRS-AssocCSI-RS-AllCC" is set to an integer of 5 to 32, the "maxNumberDiffSymbolNZP-CSI-RS-ActBWP-AllCC" is set to an integer of 1 to 64, the "maxNumberSimultaneousNZP-CSI-RS-ActBWP-AllCC" is set to an integer of 1 to 64, the "totalNumberPortsDiffSymbolNZP-CSI-RS-ActBWP-AllCC" is set to an integer of 2 to 256, the "totalNumberPortsSimultaneousNZP-CSI-RS-ActBWP-AllCC" is set to an integer of 2 to 256, the "diffSymbolCSI-ReportsAllCC" is set to an integer of 5 to 32, and the "simultaneousCSI-ReportsAllCC" is set to an integer of 5 to 32. Note that each of the information elements is optional, and may be configured or need not be configured.

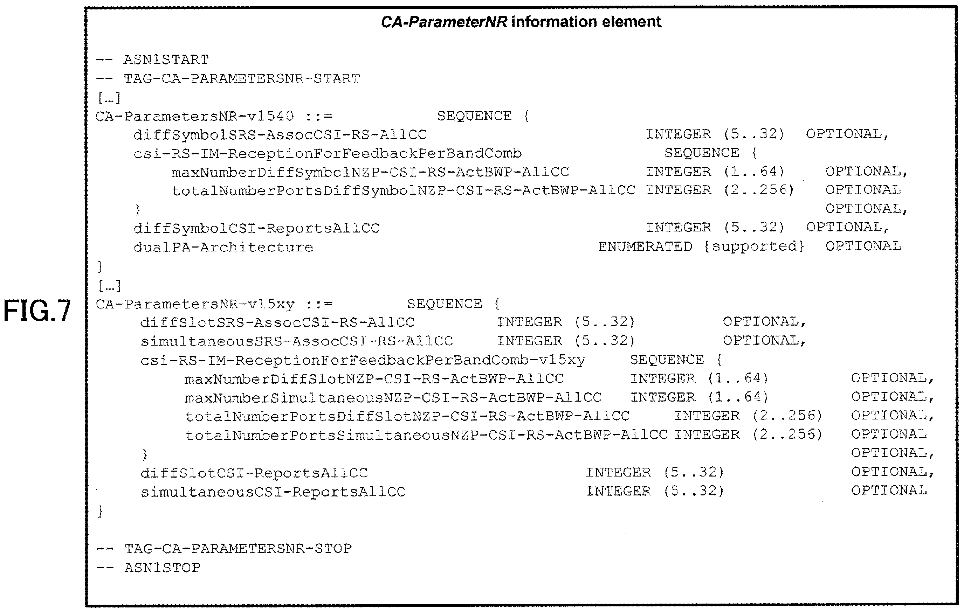

FIG. 7 is a figure illustrating an example (3) of a specification change of a report of terminal capabilities according to the embodiment of present invention. As illustrated in FIG. 7, the "diffSymbolSRS-AssocCSI-RS-AllCC" included in a conventionally defined "CA-ParametersNR-v1540" is set to an integer of 5 to 32, the "maxNumberDiffSymbolNZP-CSI-RS-ActBWP-AllCC" is set to an integer of 1 to 64, the "totalNumberPortsDiffSymbolNZP-CSI-RS-ActBWP-AllCC" is set to an integer of 2 to 256, and the "diffSymbolCSI-ReportsAllCC" is set to an integer of 5 to 32. Note that each of the information elements is optional, and may be configured or need not be configured.

Further, the "diffSlotSRS-AssocCSI-RS-AllCC" included in a newly defined "CA-ParametersNR-v15xy" is set to an integer of 5 to 32, the "simultaneousSRS-AssocCSI-RS-AllCC" is set to an integer of 5 to 32, the "maxNumberDiffSlotNZP-CSI-RS-ActBWP-AllCC" is set to an integer of 1 to 64, the "maxNumberSimultaneousNZP-CSI-RS-ActBWP-AllCC" is set to an integer of 1 to 64, the "totalNumberPortsDiffSlotNZP-CSI-RS-ActBWP-AllCC" is set to an integer of 2 to 256, the "totalNumberPortsSimultaneousNZP-CSI-RS-ActBWP-AllCC" is set to an integer of 2 to 256, the "diffSlotCSI-ReportsAllCC" is set to an integer of 5 to 32, and the "simultaneousCSI-ReportsAllCC" is set to an integer of 5 to 32. Note that each of the information elements is optional, and may be configured or need not be configured.

According to the above embodiment, the terminal 20 can report the number of CSI reports, the number of CSI-RS resources, the number of ports in CSI-RS resources, or the total number of SRS resources associated with CSI-RS resources supported for each band combination to the base station 10, by clarifying the target time domain.

Specifically, the target range of the report of the terminal capabilities in the wireless communication system can be clarified.

Hereinafter, as another embodiment, terminal capabilities related to a report of the number of CSI-RS resources supported by the terminal 20 for each band combination are explained. The number of CSI-RS resources supported by the terminal 20 is specified for each slot. Therefore, the way of counting the number of CSI-RS resources may be different according to an arrangement of an active duration of CSI-RS (active CSI-RS duration) in a slot, a subcarrier spacing of a BWP, a CC, or a band in which the CSI-RS is arranged, and the like.

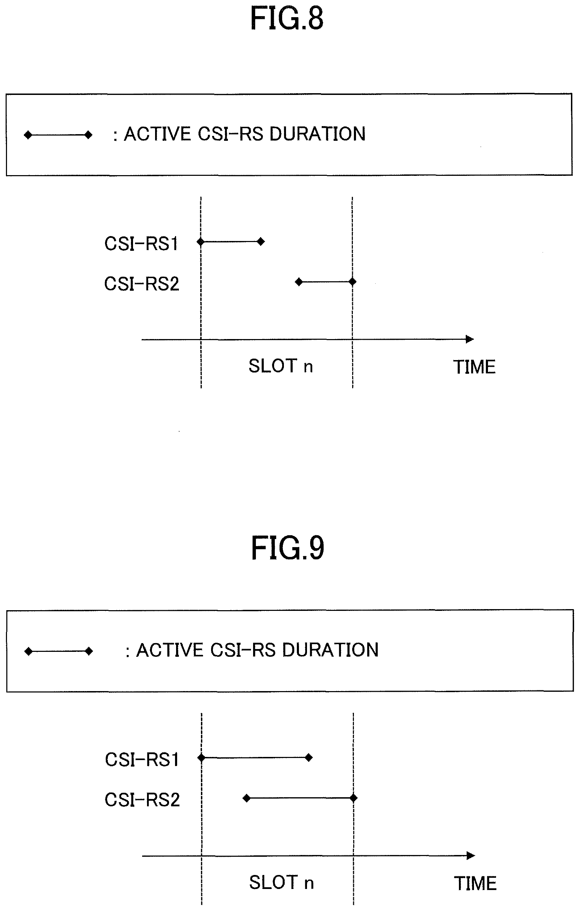

FIG. 8 is a figure for explaining an example (1) of a way of counting a reference signal according to the embodiment of present invention. In FIG. 8, a CSI-RS1 and a CSI-RS2 are arranged in a BWP, CC or band of the same subcarrier spacing. As illustrated in FIG. 8, an active CSI-RS duration is defined for each CSI-RS.

In the case of the active CSI-RS duration as illustrated in FIG. 8, the number of CSI-RS resources may be determined to be 2 in total, by counting the total number of CSI-RS resources in the slot, or may be determined to be 1 because the number of active CSI-RS durations having symbols simultaneously transmitted or having overlapping symbols is at most 1.

In FIG. 8, the CSI-RS1 and the CSI-RS2 may be different in at least one of the BWP, the CC or the band arranged therein, or may be the same in the BWP, the CC or the band arranged therein.

FIG. 9 is a figure for explaining an example (2) of a way of counting a reference signal according to the embodiment of present invention. In FIG. 9, the CSI-RS1 and the CSI-RS2 are arranged in the BWP, the CC or the band of the same subcarrier spacing. As illustrated in FIG. 8, an active CSI-RS duration is defined for each CSI-RS.

In the case of the active CSI-RS durations as illustrated in FIG. 9, the number of CSI-RS resources may be determined to be 2 in total, by counting the total number of CSI-RS resources in the slot, or may be determined to be 2 in total, because the number of active CSI-RS durations having symbols simultaneously transmitted or having overlapping symbols is at most 2.

In FIG. 9, the CSI-RS1 and the CSI-RS2 may be different in at least one of the BWP, the CC or the band arranged therein, or may be the same in the BWP, the CC or the band arranged therein.

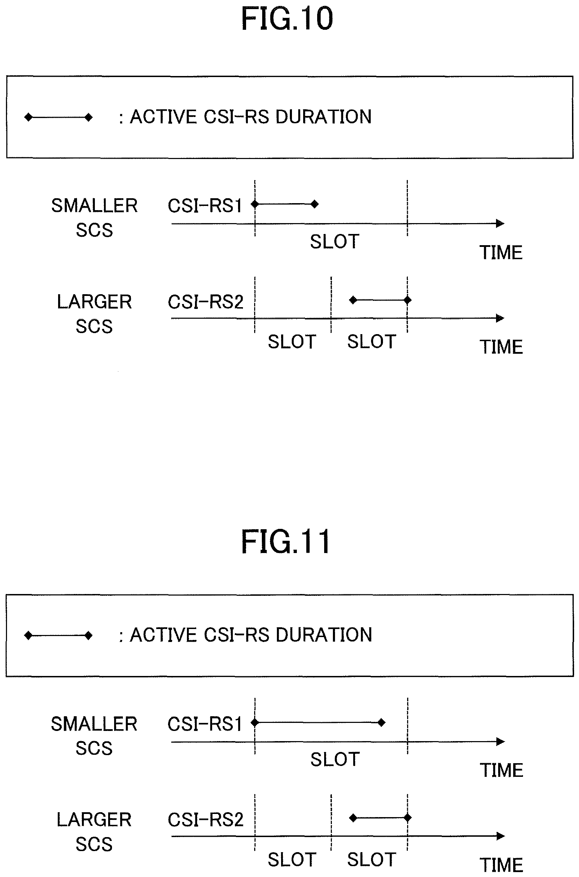

FIG. 10 is a figure for explaining an example (3) of a way of counting a reference signal according to the embodiment of present invention. In FIG. 10, the CSI-RS1 and the CSI-RS2 are arranged in BWPs, CCs or bands of which the subcarrier spacings are different. As illustrated in FIG. 10, the subcarrier spacing of the CSI-RS1 is less than the subcarrier spacing of the CSI-RS2. As illustrated in FIG. 10, an active CSI-RS duration is defined for each CSI-RS.

In the case of the active CSI-RS duration as illustrated in FIG. 10, the number of CSI-RS resources may be determined to be 2 in total by counting the total number of CSI-RS resources in the slot of the CSI-RS1 of which the subcarrier spacing is smaller, or may be determined to be 1 because the number of active CSI-RS durations having symbols simultaneously transmitted or having overlapping symbols is at most 1.

In the case of the active CSI-RS duration as illustrated in FIG. 10, the number of CSI-RS resources may be determined to be 1 in total by counting the total number of CSI-RS resources in the slot of the CSI-RS2 of which the subcarrier spacing is larger, or may be determined to be 1 because the number of active CSI-RS durations having symbols simultaneously transmitted or having overlapping symbols is at most 1.

In FIG. 10, the CSI-RS1 and the CSI-RS2 may be different in at least one of the BWP, the CC or the band arranged therein, or may be the same in the BWP, the CC or the band arranged therein. As illustrated in FIG. 10, the subcarrier spacing of a CSI-RS in which the number of CSI-RS resources is counted is not limited to the same subcarrier spacing but may be different subcarrier spacings.

FIG. 11 is a figure for explaining an example (4) of a way of counting a reference signal according to the embodiment of present invention. In FIG. 10, the CSI-RS1 and the CSI-RS2 are arranged in BWPs, CCs or bands of which the subcarrier spacings are different. As illustrated in FIG. 10, the subcarrier spacing of the CSI-RS1 is less than the subcarrier spacing of the CSI-RS2. As illustrated in FIG. 11, an active CSI-RS duration is defined for each CSI-RS.

In the case of the active CSI-RS duration as illustrated in FIG. 11, the number of CSI-RS resources may be determined to be 2 in total by counting the total number of CSI-RS resources in the slot of the CSI-RS1 of which the subcarrier spacing is smaller, or may be determined to be 2 in total because the number of active CSI-RS durations having symbols simultaneously transmitted or having overlapping symbols is at most 2.

In the case of the active CSI-RS duration as illustrated in FIG. 11, the number of CSI-RS resources may be determined to be 2 in total by counting the total number of CSI-RS resources in the slot of the CSI-RS2 of which the subcarrier spacing is larger, or may be determined to be 2 in total because the number of active CSI-RS durations having symbols simultaneously transmitted or having overlapping symbols is at most 2.

In FIG. 11, the CSI-RS1 and the CSI-RS2 may be different in at least one of the BWP, the CC or the band arranged therein, or may be the same in the BWP, the CC or the band arranged therein. As illustrated in FIG. 10, the subcarrier spacing of a CSI-RS in which the number of CSI-RS resources is counted is not limited to the same subcarrier spacing but may be different subcarrier spacings.

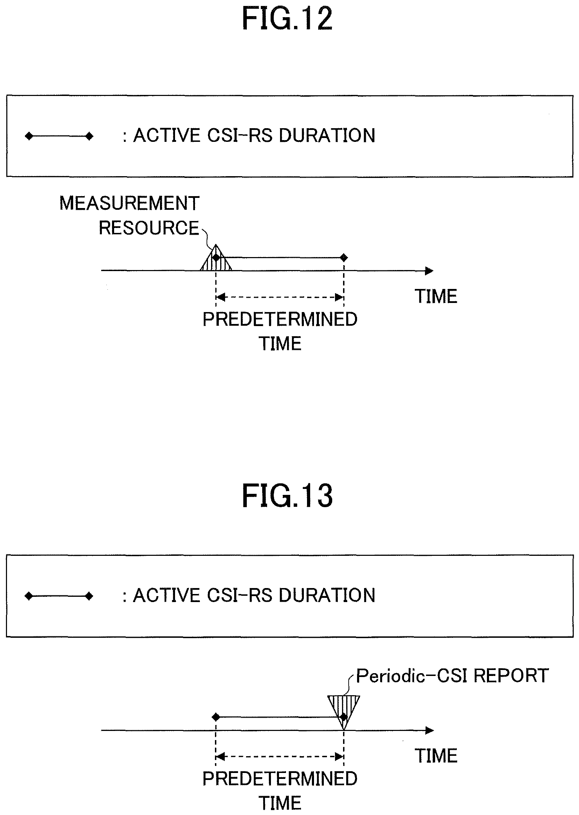

Hereinafter, a way of counting active CSI-RS durations of periodic CSI-RS is explained. In the periodic CSI-RS, an active CSI-RS duration may be defined as a duration from a point in time of configuration to a point in time of release, or may be defined as illustrated in FIG. 12 to FIG. 14.

FIG. 12 is a figure for explaining an example (1) of an active duration of a reference signal according to the embodiment of present invention. As illustrated in FIG. 12, the active CSI-RS duration may be defined as a duration of a predetermined time after a point in time when a measurement resource or a measurement instance is configured. The measurement resource may be, for example, a CSI-RS or an SSB. For example, the predetermined time may be specified by an absolute time such as milliseconds, may be specified by the number of symbols or the number of slots, may be configured by a higher layer, or may be a value reported in UE capability.

FIG. 13 is a figure for explaining an example (2) of an active duration of a reference signal according to the embodiment of present invention. As illustrated in FIG. 13, the active CSI-RS duration may be defined as a duration of a predetermined time before a point in time when a periodic CSI report is executed. The measurement resource may be, for example, a CSI-RS or an SSB. For example, the predetermined time may be specified by an absolute time such as milliseconds, may be specified by the number of symbols or the number of slots, may be configured by a higher layer, or may be a value reported in UE capability. Note that the active CSI-RS duration illustrated in FIG. 13 may be defined as an active CSI-report duration.

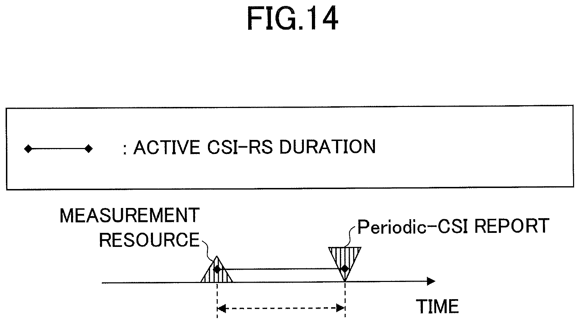

FIG. 14 is a figure for explaining an example (3) of an active duration of a reference signal according to the embodiment of present invention. As illustrated in FIG. 14, the active CSI-RS duration may be defined as a duration from a point in time when a measurement resource or a measurement instance is configured, to a point in time when a periodic CSI report is executed. The active CSI-RS duration illustrated in FIG. 14 may be defined as an active CSI-report duration.

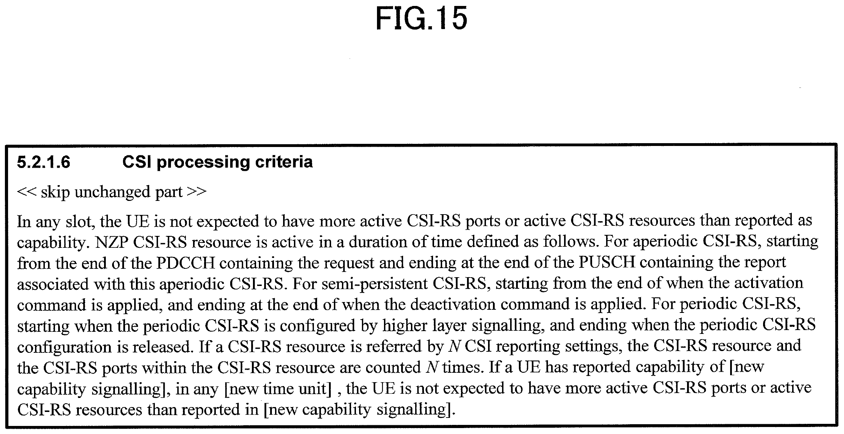

FIG. 15 is a figure for explaining an example (1) of a specification change of a way of counting a reference signal according to the embodiment of present invention. As illustrated in FIG. 15, the way of counting active CSI-RS ports or active CSI-RS resources may be counting the active CSI-RS ports or active CSI-RS resources by summing aperiodic CSI-RSs, semi-persistent CSI-RSs, and periodic CSI-RSs. Specifically, in the UE capability report, a total value obtained by counting aperiodic CSI-RSs, semi-persistent CSI-RSs, and periodic CSI-RSs may be adopted as a single report by signaling that is newly defined.

The active CSI-RS duration explained with reference to FIG. 8 to FIG. 14 may be applied to the active durations of the aperiodic CSI-RSs, semi-persistent CSI-RSs, and periodic CSI-RSs. The active duration of the aperiodic CSI-RSs may be a duration from the end of a PDCCH including a request of a report, to a PUSCH including a report of aperiodic CSI-RS. The active duration of the semi-persistent CSI-RS may be a duration from a point in time when an application of an activation command is completed, to a point in time when an application of a deactivation command is completed. The active duration of the periodic CSI-RS may be a duration from a point in time of configuration by a higher layer, to a point in time when the configuration is released.

The duration in which the number of CSI-RS resources, which is the subject of the UE capability report, is counted may be one of a symbol, slot, subframe, and frame, may be one of an active duration of an aperiodic CSI-RS, semi-persistent CSI-RS, and the periodic CSI-RS, or may be a multiple of one of the above in a case where subcarrier spacings with which CSI-RSs are configured are different. The duration in which the number of CSI-RS resources, which is the subject of the UE capability report, is counted may be defined according to a CSI-RS of which the subcarrier spacing is smaller, or the duration in which the number of CSI-RS resources, which is the subject of the UE capability report, is counted may be defined according to a CSI-RS of which the subcarrier spacing is larger.

In a case where the duration in which the number of CSI-RS resources is counted, is an active CSI-RS duration, a value that is set in "SupportedCSI-RS-Resource" indicated by the UE capability may be defined as the maximum value of the maximum duration (for example, 640 slots) in the specification of the periodic CSI. For example, the "SupportedCSI-RS-Resource" includes the maximum transmission port number per resource, the maximum resource per band, and the maximum transmission port number per band.

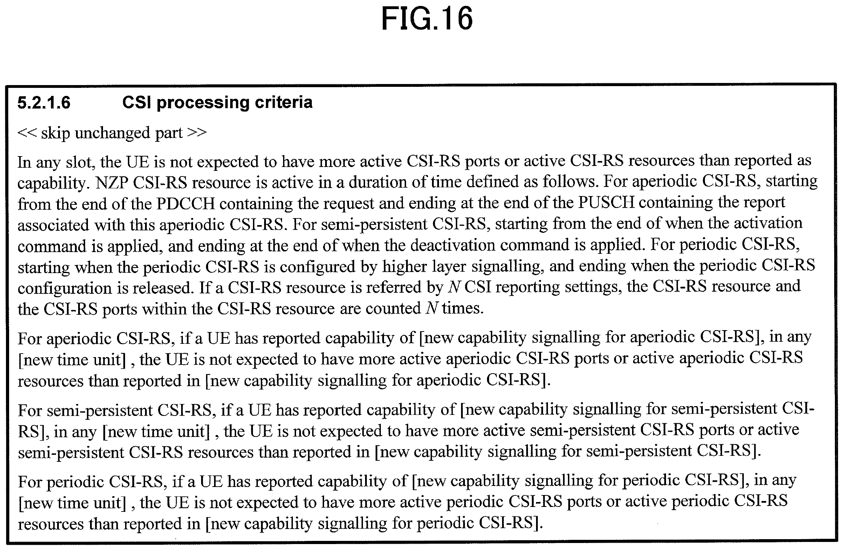

FIG. 16 is a figure for explaining an example (2) of a specification change of a way of counting a reference signal according to the embodiment of present invention. As illustrated in FIG. 16, the way of counting active CSI-RS ports or active CSI-RS resources may be independently counting each of aperiodic CSI-RSs, semi-persistent CSI-RSs, and periodic CSI-RSs. Specifically, in the UE capability report, values obtained by counting aperiodic CSI-RSs, semi-persistent CSI-RSs, and periodic CSI-RSs may be adopted as respective reports by signaling that is newly defined.

The active CSI-RS duration explained with reference to FIG. 8 to FIG. 14 may be applied to the active durations of the aperiodic CSI-RSs, semi-persistent CSI-RSs, and periodic CSI-RSs. The active duration of the aperiodic CSI-RSs may be a duration from the end of a PDCCH including a request of a report, to the end of a PUSCH including a report of aperiodic CSI-RS. The active duration of the semi-persistent CSI-RS may be a duration from a point in time when an application of an activation command is completed, to a point in time when an application of a deactivation command is completed. The active duration of the periodic CSI-RS may be a duration from a point in time of configuration by a higher layer, to a point in time when the configuration is released.

The duration in which the number of CSI-RS resources, which is the subject of the UE capability report, is counted may be one of a symbol, slot, subframe, and frame, may be one of an active duration of an aperiodic CSI-RS, semi-persistent CSI-RS, and the periodic CSI-RS, or may be a multiple of one of the above in a case where subcarrier spacings with which CSI-RSs are configured are different. The duration in which the number of CSI-RS resources, which is the subject of the UE capability report, is counted, may be defined according to a CSI-RS of which the subcarrier spacing is smaller, or the duration in which the number of CSI-RS resources, which is the subject of the UE capability report, is counted, may be defined according to a CSI-RS of which the subcarrier spacing is larger.

In a case where the duration in which the number of CSI-RS resources is counted is an active CSI-RS duration, a value that is set in "SupportedCSI-RS-Resource" indicated by the UE capability, may be defined as the maximum value of the maximum duration (for example, 640 slots) in the specification of the periodic CSI. For example, the "SupportedCSI-RS-Resource" includes the maximum transmission port number per resource, the maximum resource per band, and the maximum transmission port number per band.

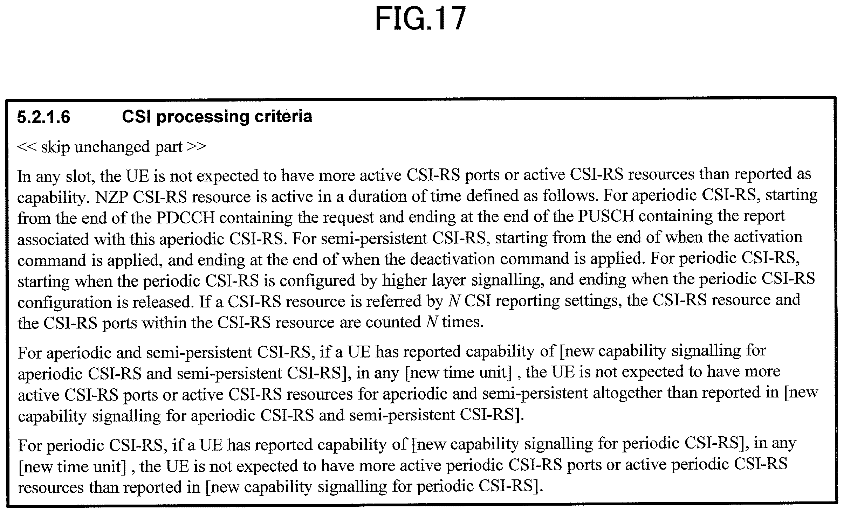

FIG. 17 is a figure for explaining an example (3) of a specification change of a way of counting a reference signal according to the embodiment of present invention. As illustrated in FIG. 17, the way of counting active CSI-RS ports or active CSI-RS resources may be counting them by summing aperiodic CSI-RSs and semi-persistent CSI-RSs, and by independently counting periodic CSI-RSs. Specifically, in the UE capability report, a total value obtained by counting aperiodic CSI-RSs and semi-persistent CSI-RSs, and a value obtained by counting periodic CSI-RSs, may be adopted as respective reports by signaling that is newly defined.

The active CSI-RS duration explained with reference to FIG. 8 to FIG. 14 may be applied to the active durations of the aperiodic CSI-RSs, semi-persistent CSI-RSs, and periodic CSI-RSs. The active duration of the aperiodic CSI-RSs may be a duration from the end of a PDCCH including a request of a report to the end of a PUSCH including a report of aperiodic CSI-RS. The active duration of the semi-persistent CSI-RS may be a duration from a point in time when an application of an activation command is completed, to a point in time when an application of a deactivation command is completed. The active duration of the periodic CSI-RS may be a duration from a point in time of configuration by a higher layer, to a point in time when the configuration is released.

The duration in which the number of CSI-RS resources, which is the subject of the UE capability report, is counted may be one of a symbol, slot, subframe, and frame, may be one of an active duration of an aperiodic CSI-RS, semi-persistent CSI-RS, and the periodic CSI-RS, or may be a multiple of one of the above in a case where subcarrier spacings with which CSI-RSs are configured are different. The duration in which the number of CSI-RS resources, which is the subject of the UE capability report, is counted may be defined according to a CSI-RS of which the subcarrier spacing is smaller, or the duration in which the number of CSI-RS resources, which is the subject of the UE capability report, is counted may be defined according to a CSI-RS of which the subcarrier spacing is larger.

In a case where the duration in which the number of CSI-RS resources is counted is an active CSI-RS duration, a value that is set in "SupportedCSI-RS-Resource" indicated by the UE capability, may be defined as the maximum value of the maximum duration (for example, 640 slots) in the specification of the periodic CSI. For example, the "SupportedCSI-RS-Resource" includes the maximum transmission port number per resource, the maximum resource per band, and the maximum transmission port number per band.

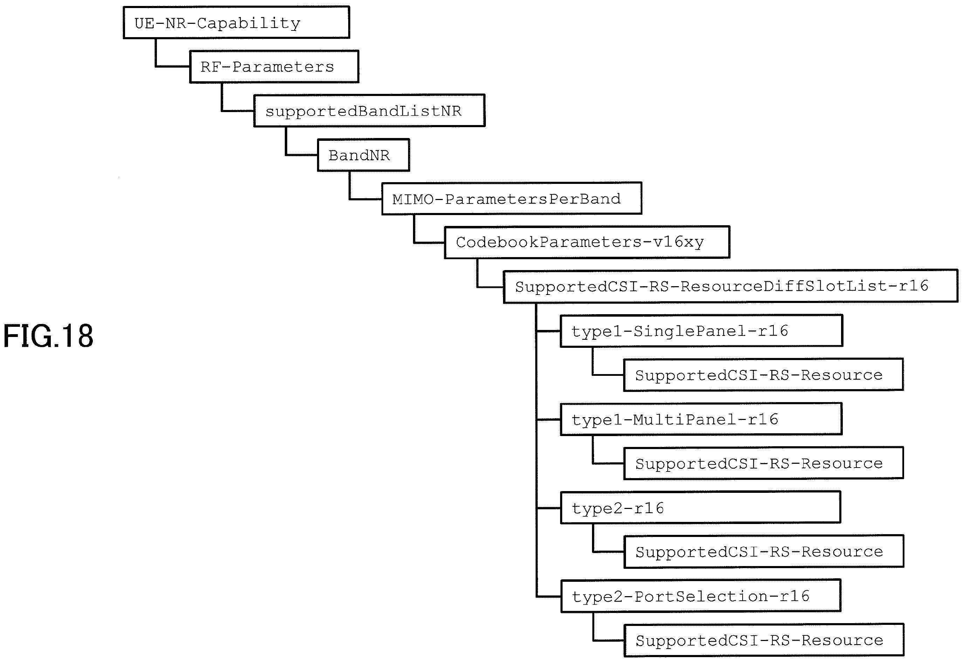

FIG. 18 is a figure for explaining an example (1) of a structure of a report of terminal capabilities according to the embodiment of present invention. FIG. 18 illustrates an example of a structure of information elements in which a codebook parameter is configured for each band.

The "UE-NR-Capability" illustrated in FIG. 18 is an information element for reporting, to the network, parameters indicating radio access capabilities for the NR of the terminal 20. As illustrated in FIG. 18, the "UE-NR-Capability" includes "RF-Parameters".

The "RF-Parameters" are information elements for reporting capabilities of radio to the network. As illustrated in FIG. 18, the "RF-Parameters" includes "supportedBandListNR".

The "supportedBandListNR" includes one or multiple information elements "BandNR". The information element "BandNR" is an information element including parameters related to the UE capability of a given band. As illustrated in FIG. 18, the "BandNR" includes "MIMO-ParametersPerBand".

The "MIMO-ParametersPerBand" is an information element including parameters related to UE capability related to MIMO. The parameters include "CodebookParameters-v16xy".

The "CodebookParameters-v16xy" includes a newly defined signaling, and includes "SupportedCSI-RS-ResourceDiffSlotList-r16". The "SupportedCSI-RS-ResourceDiffSlotList-r16" includes "type1-SinglePanel-r16", "type1-MultiPanel-r16", "type2-r16", and "type2-PortSelection-r16". As illustrated in FIG. 18, each of the types includes "SupportedCSI-RS-Resource".

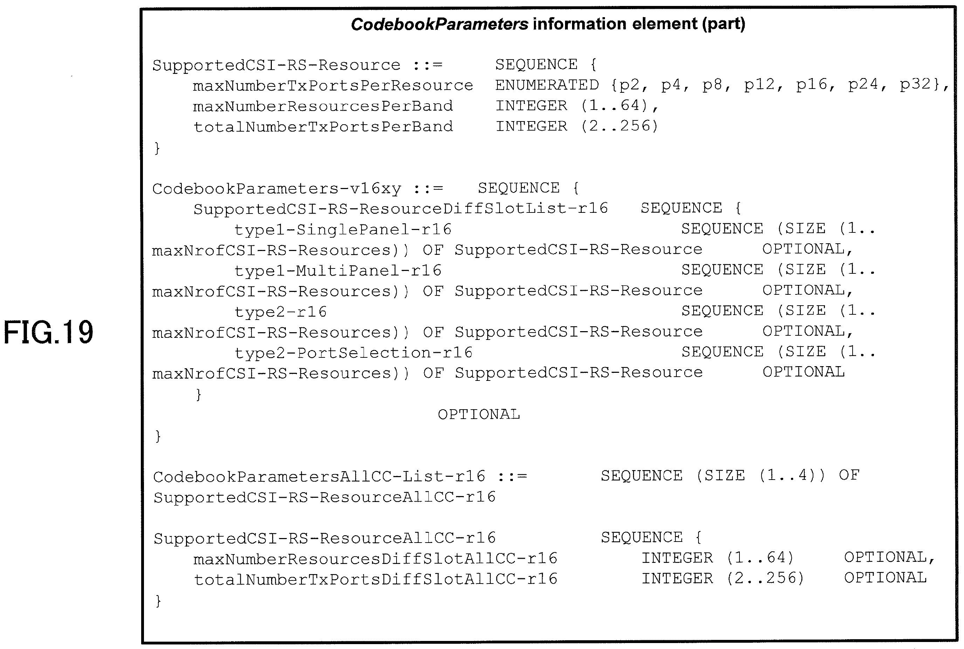

FIG. 19 is a figure for explaining an example (4) of a specification change of a report of terminal capabilities according to the embodiment of present invention. As illustrated in FIG. 19, the information element "CodebookParameters-v16xy" includes "SupportedCSI-RS-ResourceDiffSlotList-r16". The "SupportedCSI-RS-ResourceDiffSlotList-r16" includes "type1-SinglePanel-r16", "type1-MultiPanel-r16", "type2-r16", and "type2-PortSelection-r16". As illustrated in FIG. 19, each of the types includes "SupportedCSI-RS-Resource".

The "SupportedCSI-RS-Resource" includes the maximum transmission port number per resource "maxNumberTxPortsPerResource", the maximum resource per band "maxNumberResourcesPerBand", and a total number of transmission ports per band "totalNumberTxPortsPerBand". For example, the "maxNumberTxPortsPerResource" can be set to 2 ports, 4 ports, 8 ports, 12 ports, 16 ports, 24 ports, and 32 ports. For example, the "maxNumberResourcesPerBand" can be configured to 1 to 64. For example, the "totalNumberTxPortsPerBand" can be set to 2 to 256.

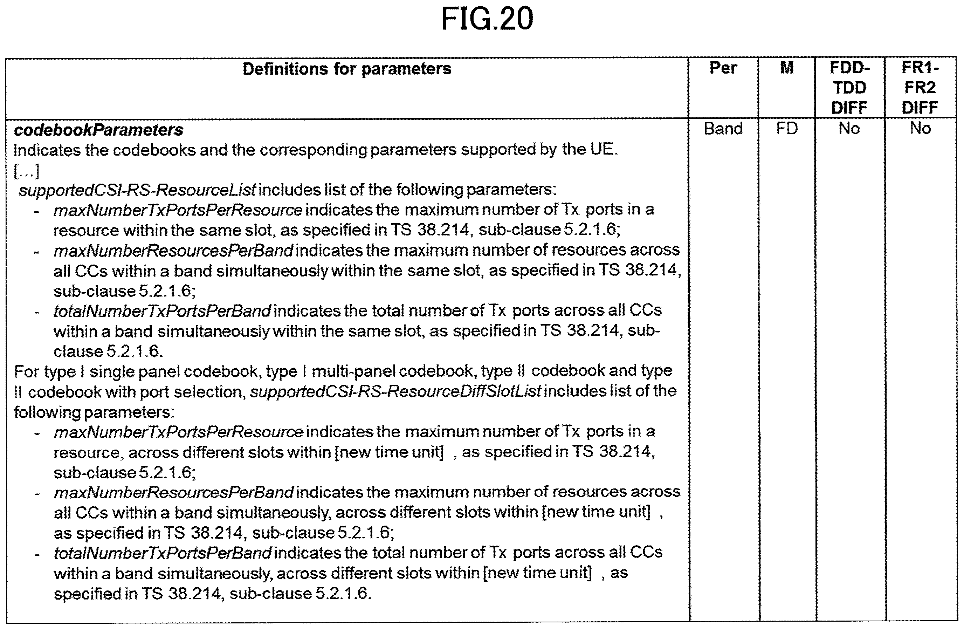

FIG. 20 is a figure for explaining an example (5) of a specification change of a report of terminal capabilities according to the embodiment of present invention. As illustrated in FIG. 20, the time domain which is the subject of the maximum transmission port number per resource "maxNumberTxPortsPerResource", the maximum resource per band"maxNumberResourcesPerBand", and the maximum transmission port number per band "totalNumberTxPortsPerBand" in the "supportedCSI-RS-ResourceDiffSlotList-r16" may be one or multiple slots and defined in a manner similarly with the duration for counting CSI-RSs illustrated in FIG. 15, FIG. 16 or FIG. 17.

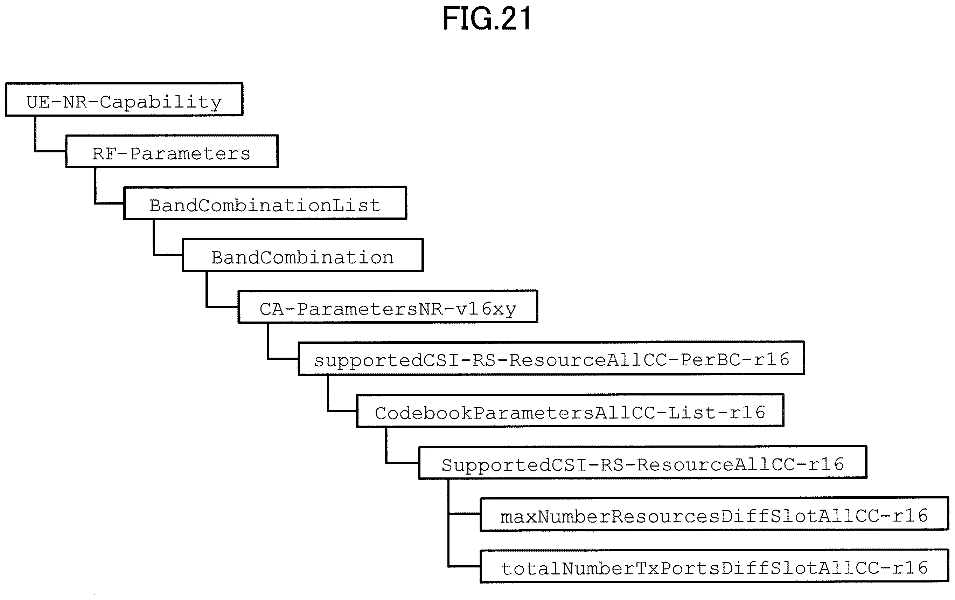

FIG. 21 is a figure for explaining an example (2) of a structure of a report of terminal capabilities according to the embodiment of present invention. The "UE-NR-Capability" illustrated in FIG. 21 is an information element for reporting, to the network, parameters indicating radio access capabilities for the NR of the terminal 20. As illustrated in FIG. 21, the "UE-NR-Capability" includes "RF-Parameters".

The "RF-Parameters" are information elements for reporting capabilities of radio to the network. As illustrated in FIG. 21, the "RF-Parameters" include "BandCombinationList". The "BandCombinationList" includes one or multiple "BandCombination".

The "BandCombination" is an information element including parameters related to UE capability in a given band combination. As illustrated in FIG. 21, the "BandCombination" includes "CA-ParametersNR-v16xy".

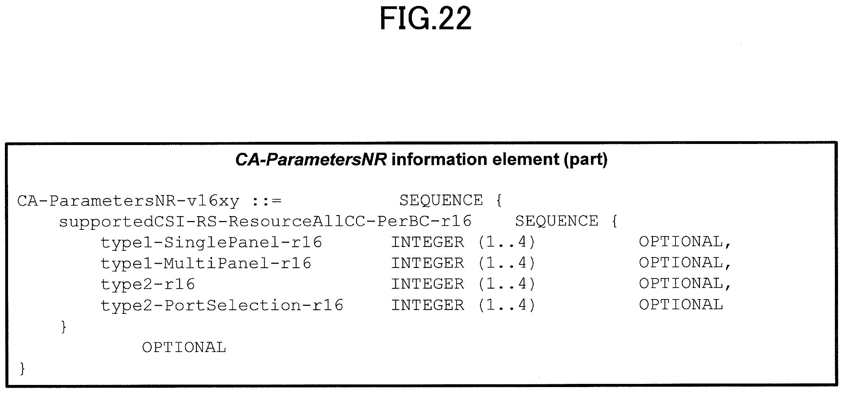

FIG. 22 is a figure for explaining an example (6) of a specification change of a report of terminal capabilities according to the embodiment of present invention. The "CA-ParametersNR-v16xy" is a newly defined signaling, and includes "supportedCSI-RS-ResourceAllCC-PerBC-r16". The "supportedCSI-RS-ResourceAllCC-PerBC-r16" includes "type1-SinglePanel-r16", "type1-MultiPanel-r16", "type2-r16", and "type2-PortSelection-r16", each of which takes a value from 1 to 4.

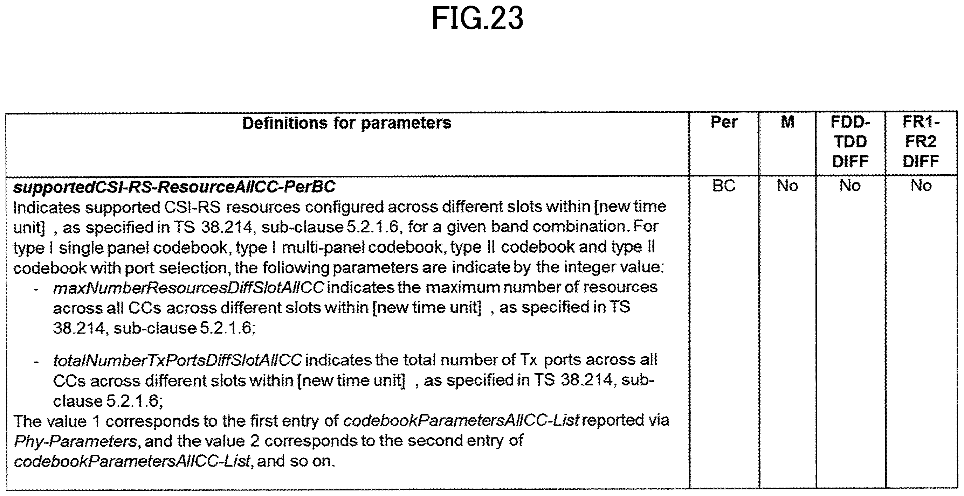

FIG. 23 is a figure for explaining an example (7) of a specification change of a report of terminal capabilities according to the embodiment of present invention. As illustrated in FIG. 23, the "supportedCSI-RS-ResourceAllCC-PerBC-r16" includes "type1-SinglePanel-r16", "type1-MultiPanel-r16", "type2-r16", and "type2-PortSelection-r16", each of which takes a value from 1 to 4. With the value, for example, in a case where the value is 1, the first entry of the "CodebookParametersAllCC-List" is specified. As illustrated in FIG. 19, the "CodebookParametersAllCC-List" includes "SupportedCSI-RS-ResourceAllCC-r16" corresponding to respective values of 1 to 4.

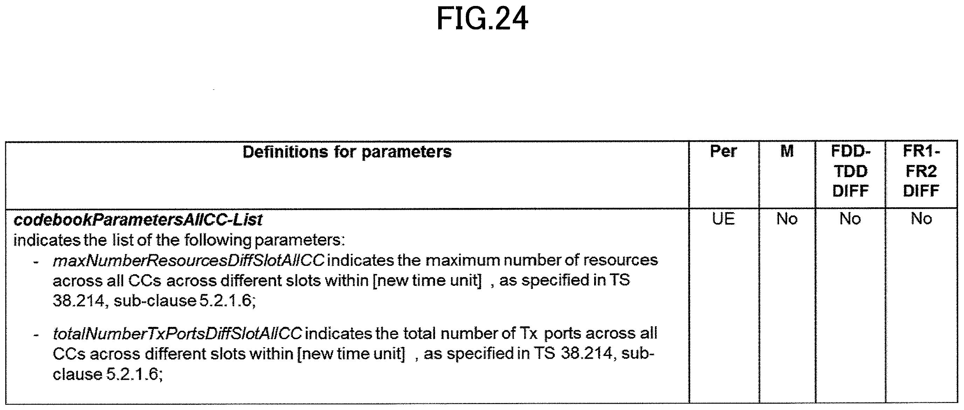

FIG. 24 is a figure for explaining an example (8) of a specification change of a report of terminal capabilities according to the embodiment of present invention. As illustrated in FIG. 24, the "SupportedCSI-RS-ResourceAllCC-r16" includes "maxNumberResourcesDiffSlotAllCC-r16" indicating the number of maximum resources across all CCs and "totalNumberTxPortsDiffSlotAllCC-r16" indicating the maximum number of ports across all CCs. The time domain which is the subject of the "maxNumberResourcesDiffSlotAllCC-r16" and the "totalNumberTxPortsDiffSlotAllCC-r16 may be one or multiple slots and defined in a manner similarly with the duration for counting CSI-RSs illustrated in FIG. 15, FIG. 16 or FIG. 17.

According to the above embodiment, the terminal 20 can transmit a report, to the base station 10, indicating UE capability in which the active durations of CSI-RSs and the number of CSI-RSs supported for each band or for each band combination, are clearly specified and in which the time domain which is the subject of the number of resources or the number of ports of supported CSI-RSs, is clarified.

Specifically, the target range of a report of terminal capabilities in a wireless communication system can be clarified.

### <Apparatus configuration>

Next, an example of functional configuration of the base station 10 and the terminal 20 that execute the processing and operations described so far will be described. The base station 10 and the terminal 20 include a function for implementing the above-described embodiment. However, each of the base station 10 and the terminal 20 may have only some of the functions in the embodiment.

### <Base station 10>

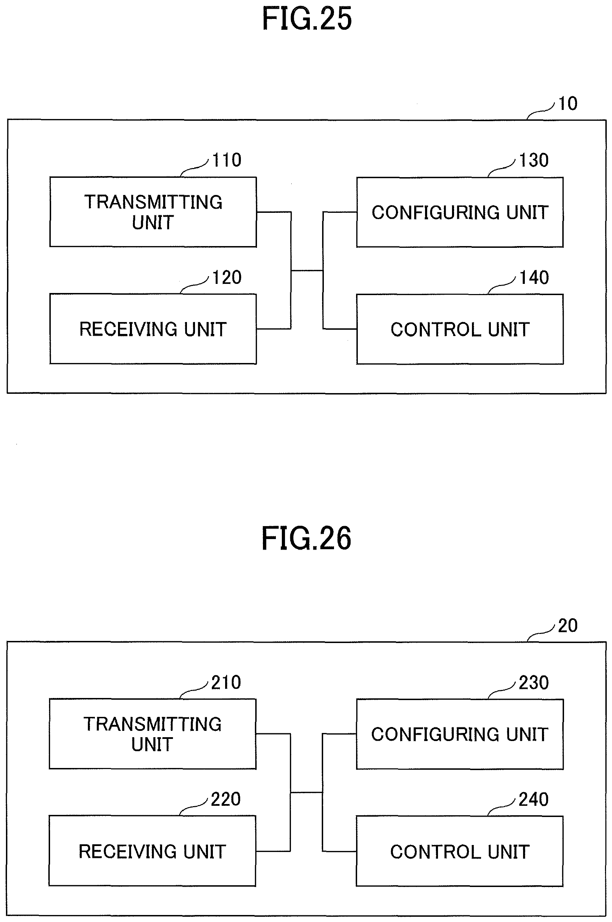

FIG. 25 is a figure illustrating an example of a functional configuration of the base station 10. As illustrated in FIG. 25, the base station 10 includes a transmitting unit 110, a receiving unit 120, a configuring unit 130, and a control unit 140. The functional configuration illustrated in FIG. 25 is only an example. As long as the operation according to the embodiment of the present invention can be executed, the functions may be divided in any way, and the functional units may be given any names.

The transmitting unit 110 includes a function of generating signals to be transmitted to the terminal 20 and wirelessly transmitting the signals. Also, the transmitting unit 110 transmits an inter-network node message to another network node. The receiving unit 120 includes a function of receiving various types of signals transmitted from the terminal 20 and acquiring, for example, information on a higher layer from the received signals. Further, the transmitting unit 110 has a function of transmitting NR-PSS, NR-SSS, NR-PBCH, a DL/UL control signal, or the like to the terminal 20. Also, the receiving unit 120 receives an inter-network node message from another network node.

The configuring unit 130 stores configuration information configured in advance and various configuration information to be transmitted to the terminal 20. The contents of the configuration information include, for example, information and the like of transmission and reception configuration according to the UE capability of the terminal 20.

As described in the embodiment, the control unit 140 performs control of processing of UE capability report of radio parameters received from the terminal 20. Also, the control unit 140 controls communication with the terminal 20 on the basis of the UE capability report of the wireless parameters received from the terminal 20. A functional unit configured to transmit signals in the control unit 140 may be included in the transmitting unit 110, and a functional unit configured to receive signals in the control unit 140 may be included in the receiving unit 120.

### <Terminal 20>

FIG. 26 is a figure illustrating an example of a functional configuration of the terminal 20 according to the embodiment of the present invention. As illustrated in FIG. 26, the terminal 20 includes a transmitting unit 210, a receiving unit 220, a configuring unit 230, and a control unit 240. The functional configuration illustrated in FIG. 26 is merely an example. As long as the operation according to the embodiment of the present invention can be executed, the functions may be divided in any way, and the function units may be given any names.

The transmitting unit 210 generates a transmission signal from transmission data and wirelessly transmit the transmission signal. The receiving unit 220 wirelessly receives various types of signals, and acquires a signal in a higher-layer from the received signal in the physical layer. Also, the receiving unit 220 has a function of receiving NR-PSS, NR-SSS, NR-PBCH, DL/UL/SL control signals, reference signals, and the like that are transmitted from the base station 10. Also, for example, in D2D communication, the transmitting unit 210 transmits, to another terminal 20, a PSCCH (Physical Sidelink Control Channel), a PSSCH (Physical Sidelink Shared Channel), a PSDCH (Physical Sidelink Discovery Channel), a PSBCH (Physical Sidelink Broadcast Channel), and the like. The receiving unit 220 receives the PSCCH, the PSSCH, the PSDCH, the PSBCH, and the like, from the other terminal 20.

The configuring unit 230 stores various types of configuration information received from the base station 10 by the receiving unit 220. The configuring unit 230 also stores configuration information configured in advance. The contents of the configuration information include, for example, information and the like of transmission and reception configuration according to the UE capability.

As described in the embodiment, the control unit 240 performs control of processing of UE capability report of radio parameters received from the terminal 20. A functional unit configured to transmit signals in the control unit 240 may be included in the transmitting unit 210, and a functional unit configured to receive signals in the control unit 240 may be included in the receiving unit 220.

### <Hardware configuration>

The block diagrams (FIGs. 25 and 26) used in explaining the above embodiments illustrate blocks in units of functions. These functional blocks (constituting units) are implemented by any combinations of at least one of hardware and software. In this regard, a method for implementing the various functional blocks is not particularly limited. That is, each functional block may be implemented by one device united physically and logically. Alternatively, each functional block may be implemented by connecting directly or indirectly (for example, in a wired or wireless manner) two or more devices that are physically or logically separated and connected together and using these multiple devices. The functional block may be implemented by combining software with the single device or multiple devices.

Functions include, but are not limited to, determining, calculating, processing, deriving, investigating, searching, confirming, receiving, transmitting, outputting, accessing, resolving, selecting, establishing, comparing, assuming, expecting, considering, broadcasting, notifying, communicating, forwarding, configuring, reconfiguring, allocating, mapping, assigning, and the like. For example, a functional block (constituting unit) that has a function of transmitting is referred to as a transmitting unit or a transmitter. As described above, a method for implementing these functions is not particularly limited.

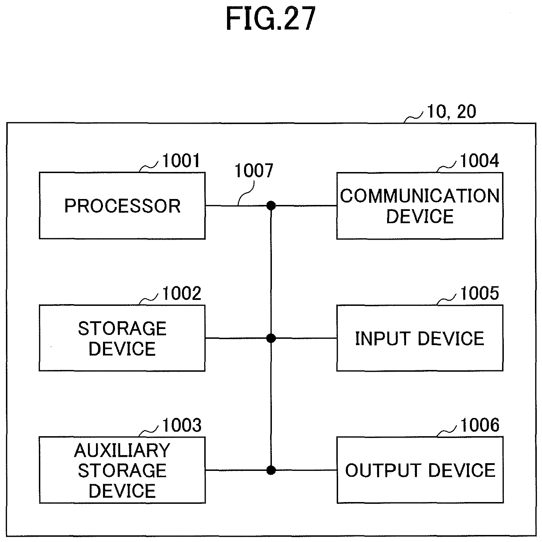

For example, the base station 10, the terminal 20, and the like according to one embodiment of the present disclosure may function as a computer that performs processing of a wireless communication according to the present disclosure. FIG. 27 is a figure illustrating an example of a hardware configuration of the base station 10 or the terminal 20 according to an embodiment of the present disclosure. Each of the base station 10 and terminal 20 may be physically configured as a computer device including a processor 1001, a storage device 1002, an auxiliary storage device 1003, a communication device 1004, an input device 1005, an output device 1006, a bus 1007, and the like.

It is noted that, in the following description, the term "device" may be read as a circuit, an apparatus, a unit, or the like. The hardware configurations of the base station 10 and the terminal 20 may be configured to include one or more of the devices illustrated in drawings, or may be configured not to include some of the devices.

Each function of the base station 10 and the terminal 20 may be implemented by reading predetermined software (program) to hardware such as the processor 1001, the storage device 1002, or the like, causing the processor 1001 to perform operations, controlling communication by the communication device 1004, and controlling at least one of reading and writing of data in the storage device 1002 and the auxiliary storage device 1003.

The processor 1001 executes, for example, an operating system to control the overall operation of the computer. The processor 1001 may be a central processing unit (CPU) including an interface with peripheral devices, a control device, an arithmetic device, a register, and the like. For example, the control unit 140, the control unit 240, and the like described above may be realized by the processor 1001.

The processor 1001 reads a program (program code), a software module, or data from at least one of the auxiliary storage device 1003 and the communication device 1004 onto the storage device 1002, and performs various processes according to the program, the software module, or the data. As the program, a program that causes a computer to perform at least some of the operations described in the embodiment explained above is used. For example, the control unit 140 of the base station 10, as illustrated in FIG. 25, may be implemented by a control program that is stored in the storage device 1002 and that is executed by the processor 1001. Also, for example, the control unit 240 of the terminal 20, as illustrated in FIG. 26, may be implemented by a control program that is stored in the storage device 1002 and that is executed by the processor 1001. Explanation has been provided above for the case in which the above various processing is performed by the single processor 1001. However, such processing may be simultaneously or sequentially performed by two or more processors 1001. The processor 1001 may be implemented with one or more chips. It is noted that the program may be transmitted from a network through an electronic communication line.

The storage device 1002 is a computer-readable recording medium and may be constituted by at least one of, for example, a ROM (Read Only Memory), an EPROM (Erasable Programmable ROM), an EEPROM (Electrically Erasable Programmable ROM), a RAM (Random Access Memory), and the like. The storage device 1002 may also be referred to as a register, a cache, a main memory (main storage device), or the like. The storage device 1002 can store a program (program code), a software module and the like that can be executed to perform a communication method according to an embodiment of the present disclosure.

The auxiliary storage device 1003 is a computer-readable recording medium and may be configured by at least one of, for example, an optical disk such as a CD-ROM (Compact Disc ROM), a hard disk drive, a flexible disk, a magneto-optical disk (for example, a compact disk, a digital versatile disk, or a Blu-ray (registered trademark) disk), a smart card, a flash memory (for example, a card, a stick, or a key drive), a floppy (registered trademark) disk, a magnetic strip, and the like. The above storage medium may be, for example, a database, a server, or other appropriate media including at least one of the storage device 1002 and the auxiliary storage device 1003.

The communication device 1004 is hardware (a transmission and reception device) for performing communication between computers through at least one of a wired and wireless networks and may also be referred to as, for example, a network device, a network controller, a network card, a communication module, or the like. The communication device 1004 may include, for example, a radio frequency switch, a duplexer, a filter, a frequency synthesizer, or the like to implement at least one of a frequency division duplex (FDD) and a time division duplex (TDD). For example, a transmission and reception antenna, an amplifier, a transmitting and receiving unit, a transmission line interface, and the like may be implemented by the communication device 1004. The transmitting and receiving unit may be implemented in such a manner that a transmitting unit and a receiving unit are physically or logically separated.

The input device 1005 is an input device (for example, a keyboard, a mouse, a microphone, a switch, a button, a sensor, or the like) that receives an input from the outside. The output device 1006 is an output device (for example, a display, a speaker, an LED lamp, or the like) that performs an output to the outside. It is noted that the input device 1005 and the output device 1006 may be integrated with each other (for example, a touch panel).

The devices, such as the processor 1001 and the storage device 1002, are connected to each other via a bus 1007 for communicating information. The bus 1007 may be constituted by using a single bus, or may be constituted by using busses different depending on devices.

The base station 10 and the terminal 20 may include hardware, such as a microprocessor, a digital signal processor (DSP), an ASIC (Application Specific Integrated Circuit), a PLD (Programmable Logic Device), or an FPGA (Field Programmable Gate Array), or alternatively, some or all of the functional blocks may be implemented by the hardware. For example, the processor 1001 may be implemented with at least one of these hardware components.

### <Summary of Embodiment>

As described above, according to the embodiment of the present invention, provided is a terminal including a receiving unit configured to receive, from a base station, a message for requesting a report of a terminal capability, a control unit configured to include, into a message for reporting the terminal capability, a terminal capability related to measurement using a reference signal for obtaining information about a channel state, for each band or for each band combination, based on the message for requesting the report of the terminal capability, and a transmitting unit configured to transmit the message for reporting the terminal capability to the base station, wherein a range of a target time domain is specified in the terminal capability related to the measurement.

According to the above configuration, the terminal 20 can transmit a report, to the base station 10, indicating UE capability in which the active durations of CSI-RSs and the number of CSI-RSs supported for each band or for each band combination are clearly specified and in which the time domain which is the subject of the number of resources or the number of ports of supported CSI-RSs is clarified. Specifically, the target range of the report of the terminal capabilities in the wireless communication system can be clarified.

The range of the target time domain may be based on an active duration of the reference signal in a slot. According to the configuration, the terminal 20 can transmit a report, to the base station 10, as UE capability in which the active durations of CSI-RSs and the number of CSI-RSs supported for each band or for each band combination are clearly specified and in which the time domain which is the subject of the number of resources or the number of ports of supported CSI-RSs is clarified.

The terminal capability related to the measurement may be a maximum number of resources used for the measurement for each band. According to the configuration, the terminal 20 can transmit a report, to the base station 10, as UE capability in which the active durations of CSI-RSs and the number of CSI-RSs supported for each band are clearly specified and in which the time domain which is the subject of the number of resources or the number of ports of supported CSI-RSs is clarified.

The terminal capability related to the measurement may be a maximum number of resources used for the measurement in all carriers for each band combination. According to the configuration, the terminal 20 can transmit a report, to the base station 10, as UE capability in which the active durations of CSI-RSs and the number of CSI-RSs supported for each band combination are clearly specified and in which the time domain which is the subject of the number of resources or the number of ports of supported CSI-RSs is clarified.

The maximum number of resources may be a total number of aperiodic reference signals, semi-persistent reference signals, and periodic reference signals, or may be a maximum number of one of aperiodic reference signals, semi-persistent reference signals, and periodic reference signals, or may be one of: a total number of aperiodic reference signals and semi-persistent reference signals; or a maximum number of periodic reference signals. According to the configuration, the terminal 20 can transmit a report, to the base station 10, as UE capability in which the active durations of CSI-RSs and the number of CSI-RSs supported for each band or for each band combination are clearly specified and in which the time domain which is the subject of the number of resources or the number of ports of supported CSI-RSs is clarified.

According to an embodiment of the present invention, a communication method causing a terminal to execute receiving, from a base station, a message for requesting a report of a terminal capability, including, into a message for reporting the terminal capability, a terminal capability related to measurement using a reference signal for obtaining information about a channel state, for each band or for each band combination, based on the message for requesting the report of the terminal capability, and a transmitting procedure for transmitting the message for reporting the terminal capability to the base station, wherein a range of a target time domain is specified in the terminal capability related to the measurement.

According to the above configuration, the terminal 20 can transmit a report to the base station 10, as UE capability in which the active durations of CSI-RSs and the number of CSI-RSs supported for each band or for each band combination are clearly specified and in which the time domain, which is the subject of the number of resources or the number of ports of supported CSI-RSs, is clarified. Specifically, the target range of the report of the terminal capabilities in the wireless communication system can be clarified.

### <Supplements to Embodiment>

The embodiment of the present invention has been described above, but the disclosed invention is not limited to the above embodiment, and those skilled in the art would understand that various modified examples, revised examples, alternative examples, substitution examples, and the like can be made. In order to facilitate understanding of the present invention, specific numerical value examples are used for explanation, but the numerical values are merely examples, and any suitable values may be used unless otherwise stated. Classifications of items in the above description are not essential to the present invention, contents described in two or more items may be used in combination if necessary, and contents described in an item may be applied to contents described in another item (unless a contradiction arises). The boundaries between the functional units or the processing units in the functional block diagrams do not necessarily correspond to the boundaries of physical components. Operations of a plurality of functional units may be physically implemented by a single component and an operation of a single functional unit may be physically implemented by a plurality of components. Concerning the processing procedures described above in the embodiments, the orders of steps may be changed unless a contradiction arises. For the sake of convenience for describing the processing, the base station 10 and the terminal 20 have been described with the use of the functional block diagrams, but these apparatuses may be implemented by hardware, software, or a combination thereof. Each of software functioning with a processor of the base station 10 according to the embodiment of the present invention and software functioning with a processor of the terminal 20 according to the embodiment of the present invention may be stored in a random access memory (RAM), a flash memory, a read-only memory (ROM), an EPROM, an EEPROM, a register, a hard disk (HDD), a removable disk, a CD-ROM, a database, a server, or any suitable recording media.

Also, the notification of information is not limited to the aspect or embodiment described in the present disclosure, but may be performed by other methods. For example, the notification of information may be performed by physical layer signaling (for example, DCI (Downlink Control Information), UCI (Uplink Control Information)), higher layer signaling (for example, RRC (Radio Resource Control) signaling, MAC (Medium Access Control) signaling, broadcast information (an MIB (Master Information Block) and an SIB (System Information Block)), other signals, or combinations thereof. The RRC signaling may be also be referred to as an RRC message and may be, for example, an RRC connection setup message, an RRC connection reconfiguration message, or the like.

Each aspect and embodiment described in the present disclosure may be applied to at least one of a system that uses a suitable system such as LTE (Long Term Evolution), LTE-A (LTE-Advanced), SUPER 3G, IMT-Advanced, 4G (4th generation mobile communication system), 5G (5th generation mobile communication system), FRA (Future Radio Access), NR (New Radio), W-CDMA (registered trademark), GSM (registered trademark), CDMA2000, UMB (Ultra Mobile Broadband), IEEE 802.11 (Wi-Fi (registered trademark)), IEEE 802.16 (WiMAX (registered trademark)), IEEE 802.20, UWB (Ultra-WideBand), or Bluetooth (registered trademark), and a next-generation system expanded on the basis thereof. Also a plurality of systems may be combined and applied (for example, a combination of at least one of LTE and LTE-A with 5G, and the like).

In the operation procedures, sequences, flowcharts, and the like according to each aspect and embodiment described in the present disclosure, the orders of steps may be changed unless a contradiction arises. For example, in the methods described in the present disclosure, elements of various steps are illustrated by using an exemplary order and the methods are not limited to the specific orders presented.

The specific operations performed by the base station 10 described in the present disclosure may in some cases be performed by an upper node. It is clear that, in a network that includes one or more network nodes including the base station 10, various operations performed for communication with the terminal 20 can be performed by at least one of the base station 10 and another network node other than the base station 10 (for example, a MME, a S-GW, or the like may be mentioned, but not limited thereto). In the above, the description has been made for the case where another network node other than the base station 10 is a single node as an example. But the another network node may be a combination of a plurality of other network nodes (for example, a MME and a S-GW).

Information, signals, or the like described in the present disclosure may be output from a higher layer (or a lower layer) to a lower layer (or a higher layer). Information, signals, or the like described in the present disclosure may be input and output via a plurality of network nodes.

Information or the like that has been input or output may be stored at a predetermined place (for example, a memory) and may be managed with the use of a management table. Information or the like that is input or output can be overwritten, updated, or appended. Information or the like that has been output may be deleted. Information or the like that has been input may be transmitted to another apparatus.

In the present disclosure, determination may be made with the use of a value expressed by one bit (0 or 1), may be made with the use of a Boolean value (true or false), and may be made through a comparison of numerical values (for example, a comparison with a predetermined value).

Regardless of whether software is referred to as software, firmware, middleware, microcode, a hardware description language, or another name, software should be interpreted broadly to mean instructions, instruction sets, codes, code segments, program codes, a program, a sub-program, a software module, an application, a software application, a software package, a routine, a subroutine, an object, an executable file, an execution thread, a procedure, a function, and the like.

Software, instructions, information, or the like may be transmitted and received through transmission media. For example, in a case where software is transmitted from a website, a server or another remote source through at least one of wired technology (such as a coaxial cable, an optical-fiber cable, a twisted pair, or a digital subscriber line (DSL)) and radio technology (such as infrared or microwaves), at least one of the wired technology and the radio technology is included in the definition of a transmission medium.

Information, signals, and the like described in the present disclosure may be expressed with the use of any one of various different technologies. For example, data, instructions, commands, information, signals, bits, symbols, chips, and the like mentioned herein throughout the above explanation may be expressed by voltages, currents, electromagnetic waves, magnetic fields or magnetic particles, optical fields or photons, or any combinations thereof.

The terms described in the present disclosure and the terms necessary for understanding the present disclosure may be replaced with terms having the same or similar meanings. For example, at least one of a channel and a symbol may be a signal (signaling). A signal may be a message. A component carrier (CC) may be referred to as a carrier frequency, a cell, a frequency carrier, or the like.

The terms "system" and "network" used in the present disclosure are used interchangeably.

Information, parameters, and the like described in the present disclosure may be expressed by absolute values, may be expressed by relative values with respect to predetermined values, and may be expressed by corresponding different information. For example, radio resources may be indicated by indexes.

The above-described names used for the parameters are not restrictive in any respect. In addition, formulas or the like using these parameters may be different from those explicitly disclosed in the present disclosure. Various channels (for example, a PUCCH, a PDCCH, and the like) and information elements can be identified by any suitable names, and therefore, various names given to these various channels and information elements are not restrictive in any respect.

In the present disclosure, terms such as "base station (BS)", "radio base station", "base station apparatus", "fixed station", "NodeB", "eNodeB (eNB)", "gNodeB (gNB)", "access point", "transmission point", "reception point", "transmission/reception point", "cell", "sector", "cell group", "carrier", "component carrier", and the like may be used interchangeably. A base station may be referred to as a macro-cell, a small cell, a femtocell, a pico-cell, or the like.

A base station can accommodate one or a plurality of (for example, three) cells (that may be called sectors). In a case where a base station accommodates a plurality of cells, the whole coverage area of the base station can be divided into a plurality of smaller areas. For each smaller area, a base station subsystem (for example, an indoor miniature base station RRH (Remote Radio Head)) can provide a communication service. The term "cell" or "sector" denotes all or a part of the coverage area of at least one of a base station and a base station subsystem that provides communication services in the coverage.

In the present disclosure, terms such as "mobile station (MS)", "user terminal", "terminal (UE)", and "terminal" may be used interchangeably.

By the person skilled in the art, a mobile station may be referred to as any one of a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, and other suitable terms.

At least one of a base station and a mobile station may be referred to as a transmitting apparatus, a receiving apparatus, a communication apparatus, or the like. At least one of a base station and a mobile station may be an apparatus mounted on a mobile body, or may be a mobile body itself, or the like. A mobile body may be a transporting device (e.g., a vehicle, an airplane, and the like), an unmanned mobile (e.g., a drone, an automated vehicle, and the like), or a robot (of a manned or unmanned type). It is noted that at least one of a base station and a mobile station includes an apparatus that does not necessarily move during a communication operation. For example, at least one of a base station and a mobile station may be an IoT (Internet of Thing) device such as a sensor.

In addition, a base station according to the present disclosure may be read as a user terminal. For example, each aspect or embodiment of the present disclosure may be applied to a configuration in which communication between a base station and a user terminal is replaced by communication between a plurality of terminals 20 (that may be called D2D (Device-to-Device), V2X (Vehicle-to-Everything), or the like). In this case, a terminal 20 may have above-described functions of the base station 10. In this regard, a word such as "up" or "down" may be read as a word corresponding to communication between terminals (for example, "side"). For example, an uplink channel, a downlink channel, or the like may be read as a side channel.

Similarly, a user terminal according to the present disclosure may be replaced with a base station. In this case, a base station may have above-described functions of the user terminal.

The term "determine" used herein may mean various operations. For example, judging, calculating, computing, processing, deriving, investigating, looking up, searching, inquiring (for example, looking up a table, a database, or another data structure), ascertaining, or the like may be deemed as making determination. Also, receiving (for example, receiving information), transmitting (for example, transmitting information), inputting, outputting, or accessing (for example, accessing data in a memory), or the like may be deemed as making determination. Also, resolving, selecting, choosing, establishing, comparing, or the like may be deemed as making determination. That is, doing a certain operation may be deemed as making determination. "To determine" may be read as "to assume", "to expect", "to consider", or the like.

Each of the terms "connected" and "coupled" and any variations thereof mean any connection or coupling among two or more elements directly or indirectly and can mean that one or a plurality of intermediate elements are inserted among two or more elements that are "connected" or "coupled" together. Coupling or connecting among elements may be physical one, may be logical one, and may be a combination thereof. For example, "connecting" may be read as "accessing". In a case where the terms "connected" and "coupled" and any variations thereof are used in the present disclosure, it may be considered that two elements are "connected" or "coupled" together with the use of at least one type of a medium from among one or a plurality of wires, cables, and printed conductive traces, and in addition, as some non-limiting and non-inclusive examples, it may be considered that two elements are "connected" or "coupled" together with the use of electromagnetic energy such as electromagnetic energy having a wavelength of the radio frequency range, the microwave range, or the light range (including both of the visible light range and the invisible light range).

A reference signal can be abbreviated as an RS (Reference Signal). A reference signal may be referred to as a pilot depending on an applied standard.

A term "based on" used in the present disclosure does not mean "based on only" unless otherwise specifically noted. In other words, a term "base on" means both "based on only" and "based on at least".

Any references to elements denoted by a name including terms such as "first" or "second" used in the present disclosure do not generally limit the amount or the order of these elements. These terms can be used in the present disclosure as a convenient method for distinguishing one or a plurality of elements. Therefore, references to first and second elements do not mean that only the two elements can be employed or that the first element should be, in some way, prior to the second element.

"Means" in each of the above apparatuses may be replaced with "unit", "circuit", "device", or the like.

In a case where any one of "include", "including", and variations thereof is used in the present disclosure, each of these terms is intended to be inclusive in the same way as the term "comprising". Further, the term "or" used in the present disclosure is intended to be not exclusive-or.

A radio frame may include, in terms of time domain, one or a plurality of frames. Each of one or a plurality of frames may be referred to as a subframe in terms of time domain. A subframe may include, in terms of time domain, one or a plurality of slots. A subframe may have a fixed time length (e.g., 1 ms) independent of Numerology.

Numerology may be a communication parameter that is applied to at least one of transmission and reception of a signal or a channel. Numerology may mean, for example, at least one of a subcarrier spacing (SCS), a bandwidth, a symbol length, a cyclic prefix length, a transmission time interval (TTI), the number of symbols per TTI, a radio frame configuration, a specific filtering processing performed by a transceiver in frequency domain, a specific windowing processing performed by a transceiver in time domain, and the like.

A slot may include, in terms of time domain, one or a plurality of symbols (OFDM (Orthogonal Frequency Division Multiplexing) symbols, SC-FDMA (Single Carrier Frequency Division Multiplexing) symbols) symbols, or the like). A slot may be a time unit based on Numerology.

A slot may include a plurality of minislots. Each minislot may include one or a plurality of symbols in terms of the time domain. A minislot may also be referred to as a subslot. A minislot may include fewer symbols than a slot. A PDSCH (or PUSCH) transmitted at a time unit greater than a minislot may be referred to as a PDSCH (or PUSCH) mapping type A. A PDSCH (or PUSCH) transmitted using minislots may be referred to as a PDSCH (or PUSCH) mapping type B.

Each of a radio frame, a subframe, a slot, a minislot, and a symbol means a time unit configured to transmit a signal. Each of a radio frame, a subframe, a slot, a minislot, and a symbol may be referred to as other names respectively corresponding thereto.

For example, one subframe may be referred to as a transmission time interval (TTI), a plurality of consecutive subframes may be referred to as a TTI, and one slot or one minislot may be referred to as a TTI. That is, at least one of a subframe and a TTI may be a subframe (1 ms) according to the existing LTE, may have a period shorter than 1 ms (e.g., 1 to 13 symbols), and may have a period longer than 1 ms. Instead of subframes, units expressing a TTI may be referred to as slots, minislots, or the like.

A TTI means, for example, a minimum time unit of scheduling in radio communication. For example, in an LTE system, a base station performs scheduling for each terminal 20 to assign, in TTI units, radio resources (such as frequency bandwidths, transmission power, and the like that can be used by each terminal 20). However, the definition of a TTI is not limited thereto.

A TTI may be a transmission time unit for channel-coded data packets (transport blocks), code blocks, code words, or the like, and may be a unit of processing such as scheduling, link adaptation, or the like. When a TTI is given, an actual time interval (e.g., the number of symbols) to which transport blocks, code blocks, code words, or the like are mapped may be shorter than the given TTI.

In a case where one slot or one minislot is referred to as a TTI, one or a plurality of TTIs (i.e., one or a plurality of slots or one or a plurality of minislots) may be a minimum time unit of scheduling. The number of slots (the number of minislots) included in the minimum time unit of scheduling may be controlled.

A TTI having a time length of 1 ms may referred to as an ordinary TTI (a TTI according to LTE Rel.8-12), a normal TTI, a long TTI, an ordinary subframe, a normal subframe, a long subframe, a slot, or the like. A TTI shorter than an ordinary TTI may be referred to as a shortened TTI, a short TTI, a partial or fractional TTI, a shortened subframe, a short subframe, a minislot, a subslot, a slot, or the like.

Note that a long TTI (for example, normal TTI, subframe, and the like) may be read as TTI having a time length exceeding 1 ms, and a short TTI (for example, shortened TTI) may be read as a TTI having a TTI length less than the TTI length of the long TTI and equal to or more than 1 ms.

A resource block (RB) is a resource assignment unit in terms of time domain and frequency domain and may include one or a plurality of consecutive subcarriers in terms of frequency domain. The number of subcarriers included in an RB may be the same regardless of Numerology, and, for example, may be 12. The number of subcarriers included in a RB may be determined based on Numerology.

In terms of time domain, an RB may include one or a plurality of symbols, and may have a length of 1 minislot, 1 subframe, or 1 TTI. Each of 1 TTI, 1 subframe, and the like may include one or a plurality of resource blocks.

One or a plurality of RBs may be referred to as physical resource blocks (PRBs: Physical RBs), a subcarrier group (SCG: Sub-Carrier Group), a resource element group (REG: Resource Element Group), a PRB pair, an RB pair, or the like.

A resource block may include one or a plurality of resource elements (RE: Resource Elements). For example, 1 RE may be a radio resource area of 1 subcarrier and 1 symbol.

A bandwidth part (BWP) (which may be called a partial bandwidth or the like) may mean a subset of consecutive common RBs (common resource blocks) for Numerology, in any given carrier. A common RB may be identified by a RB index with respect to a common reference point in the carrier. PRBs may be defined by a BWP and may be numbered in the BWP.

A BWP may include a BWP (UL BWP) for UL and a BWP (DL BWP) for DL. For a UE, one or a plurality of BWPs may be set in 1 carrier.

At least one of BWPs that have been set may be active, and a UE need not assume sending or receiving a predetermined signal or channel outside the active BWP. A "cell", a "carrier" or the like in the present disclosure may be read as a "BWP".

The above-described structures of radio frames, subframes, slots, minislots, symbols, and the like are merely examples. For example, the number of subframes included in a radio frame, the number of slots included in a subframe or a radio frame, the number of minislots included in a slot, the number of symbols and the number of RBs included in a slot or a minislot, the number of subcarriers included in an RB, the number of symbols included in a TTI, a symbol length, a cyclic prefix (CP) length, and the like can be variously changed.

Throughout the present disclosure, in a case where an article such as "a", "an", or "the" in English is added through a translation, the present disclosure may include a case where a noun following such article is of a plural forms.

Throughout the present disclosure, an expression that "A and B are different" may mean that "A and B are different from each other". Also this term may mean that "each of A and B is different from C". Terms such as "separate" and "coupled" may also be interpreted in a manner similar to "different".

Each aspect or embodiment described in the present disclosure may be solely used, may be used in combination with another embodiment, and may be used in a manner of being switched with another embodiment upon implementation. Notification of predetermined information (for example, notification of "being x") may be implemented not only explicitly but also implicitly (for example, by not notifying predetermined information).

In the present disclosure, the UE capability is an example of a terminal capability. The "UECapabilityEnquiry" is an example of a message for requesting a report of a terminal capability. The "UECapabilityInformation" is an example of a message for reporting the terminal capability. The CSI-RS is an example of a reference signal for obtaining information about a channel state.

Although the present disclosure has been described above, it will be understood by those skilled in the art that the present disclosure is not limited to the embodiment described in the present disclosure. Modifications and changes of the present disclosure may be possible without departing from the subject matter and the scope of the present disclosure defined by claims. Therefore, the descriptions of the present disclosure are for illustrative purposes only, and are not intended to be limiting the present disclosure in any way.

### Reference Signs List

- 10: base station
- 110: transmitting unit
- 120: receiving unit
- 130: configuring unit
- 140: control unit
- 20: terminal
- 210: transmitting unit
- 220: receiving unit
- 230: configuring unit
- 240: control unit
- 1001: processor
- 1002: storage device
- 1003: auxiliary storage device
- 1004: communication apparatus
- 1005: input device
- 1006: output device

## Claims

1. A terminal comprising:
a receiving unit configured to receive, from a base station, a message for requesting a report of a terminal capability;
a control unit configured to include, into the message for reporting the terminal capability, a terminal capability related to measurement using a reference signal for obtaining information about a channel state, for each band or for each band combination, based on the message for requesting the report of the terminal capability; and
a transmitting unit configured to transmit the message for reporting the terminal capability to the base station,
wherein a range of a target time domain is specified in the terminal capability related to the measurement.

2. The terminal according to claim 1, wherein the range of the target time domain is based on an active duration of the reference signal in a slot.

3. The terminal according to claim 2, wherein the terminal capability related to the measurement is a maximum number of resources used for the measurement for each band.

4. The terminal according to claim 2, wherein the terminal capability related to the measurement is a maximum number of resources used for the measurement in all carriers for each band combination.

5. The terminal according to claim 3 or 4, wherein the maximum number of resources is
a total number of aperiodic reference signals, semi-persistent reference signals, and periodic reference signals,
a maximum number of one of
aperiodic reference signals,
semi-persistent reference signals, and
periodic reference signals, or
one of
a total number of aperiodic reference signals and semi-persistent reference signals, or
a maximum number of periodic reference signals.

6. A communication method causing a terminal to execute:
receiving, from a base station, a message for requesting a report of a terminal capability;
including, into a message for reporting the terminal capability, a terminal capability related to measurement using a reference signal for obtaining information about a channel state, for each band or for each band combination, based on the message for requesting the report of the terminal capability; and
a transmitting procedure for transmitting the message for reporting the terminal capability to the base station,
wherein a range of a target time domain is specified in the terminal capability related to the measurement.
